(19) Europäisches Patentamt
European Patent Office
Office européen des brevets

(11) EP 4 708 934 A1

(12) **EUROPEAN PATENT APPLICATION**
published in accordance with Art. 153(4) EPC

(43) Date of publication:
**11.03.2026 Bulletin 2026/11**

(21) Application number: **24797414.0**

(22) Date of filing: **25.04.2024**

(51) International Patent Classification (IPC):
***H04W 4/80*** *(2018.01)* ***H04W 8/00*** *(2009.01)*
***H04W 76/10*** *(2018.01)* ***G01S 13/02*** *(2006.01)*
***G01S 13/75*** *(2006.01)*

(52) Cooperative Patent Classification (CPC):
**G01S 13/02; G01S 13/75; H04W 4/80; H04W 8/00; H04W 76/10**

(86) International application number:
**PCT/KR2024/005568**

(87) International publication number:
**WO 2024/225759 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2023 KR 20230055046**

(71) Applicant: **LG Electronics Inc.**
**Yeongdeungpo-gu**
**Seoul 07336 (KR)**

(72) Inventors:
- **LEE, Hongwon**
  **Seoul 06772 (KR)**
- **CHOI, Jinsoo**
  **Seoul 06772 (KR)**
- **CHO, Hangyu**
  **Seoul 06772 (KR)**
- **JANG, Insun**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING OR RECEIVING INDEX-BASED ADDRESS INFORMATION IN ULTRA-WIDEBAND WIRELESS NETWORK SYSTEM**

(57) Disclosed are a method and an apparatus for transmitting or receiving index-based address information in an ultra-wideband wireless network system. The method performed by a first device in an ultra-wideband (UWB) wireless network system, according to an embodiment of the present disclosure, may comprise the steps of: transmitting a control message including an information element (IE) related to discovery; receiving a first frame including a combination request command from a second device; and in response to the combination request, transmitting a second frame including a combination response command to the second device. Here, the combination response command may include address information regarding the second device. Here, on the basis that address indexing based on a 1-octet address index is used, the address information may be designated as a 1-octet address index corresponding to an address of the second device.

FIG.21

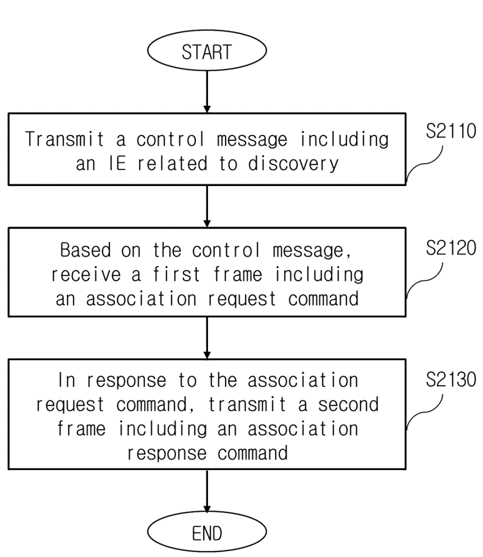


EP 4 708 934 A1

## Description

[TECHNICAL FIELD]

The present disclosure relates to a method and apparatus for transmitting or receiving index-based address information in an ultra-wideband wireless network system.

[BACKGROUND ART]

A low-rate (LR) wireless networks may support low data rate connectivity between fixed or mobile devices having limited battery consumption requirements. For example, a LR wireless network may be applied to a wireless personal area network (WPAN). The Institute of Electrical and Electronics Engineers (IEEE) 802.15.4 standard defines various technologies for a physical layer (PHY) and a medium access control (MAC) sublayer for a LR wireless network. For example, the IEEE 802.15.4 standard defines various modes that support precise ranging.

An ultra wideband (UWB) wireless network may support transmitting massive information at low power over a very wide band (e.g., a frequency band of 3.1GHz-10.6GHz). For example, an UWB technology may support transmitting digital sign information wirelessly by converting it into an impulse signal with a very short time duration below a nanosecond. The IEEE 802.15.4z standard defines an ultra wideband (UWB) technology related to the ranging technology. For example, the IEEE 802.15.4z standard includes a high-rate pulse frequency (HRP) PHY technology that supports high-speed data communication (e.g., 27-31 Mbps) and accurate two-way ranging and positioning, and a high-rate pulse frequency (LRP) PHY technology that supports various modes for low-speed data communication (e.g., a Radio Frequency Identification (RFID) application). Furthermore, the IEEE 802.15.4z standard includes an UWB PHY technology that refines the integrity and accuracy of ranging measurement, and a MAC technology that supports the exchange of ranging-related information between devices participating in ranging and the control of a time-of-flight (TOF) ranging procedure. Recently, the IEEE 802.15.4ab standard for the advancement of an UWB PHY/MAC including the refinement of the IEEE 802.15.4z standard-based wireless network technology is under discussion.

[Disclosure]

[Technical Problem]

The technical object of the present disclosure is to provide a method and apparatus for transmitting or receiving index-based address information in a UWB wireless network system.

An additional technical object of the present disclosure is to provide a method and apparatus for optimizing an address field included in a message by generating an address map in a UWB wireless network system and performing address indexing based thereon.

The technical objects to be achieved by the present disclosure are not limited to the above-described technical objects, and other technical objects which are not described herein will be clearly understood by those skilled in the pertinent art from the following description.

[Technical Solution]

A method performed by a first device in an ultra-wideband (UWB) wireless network system according to an aspect of the present disclosure may comprise: transmitting a control message including an information element (IE) related to discovery; based on the control message, receiving a first frame including an association request command from a second device; and in response to the association request command, transmitting a second frame including an association response command to the second device. Herein, the association response command may include address information for the second device. In this case, based on address indexing based on a 1-octet address index being used, the address information may be designated as a 1-octet address index corresponding to the address of the second device.

A method performed by a second device in an ultra-wideband (UWB) wireless network system according to an additional aspect of the present disclosure may comprise: receiving a control message including an information element (IE) related to discovery; based on the control message, transmitting a first frame including an association request command to a first device; and in response to the association request command, receiving a second frame including an association response command from the first device. Herein, the association response command may include address information for the second device. In this case, based on address indexing based on a 1-octet address index being used, the address information may be designated as a 1-octet address index corresponding to the address of the second device.

[Technical Effects]

According to the present disclosure, a method and apparatus for transmitting or receiving index-based address information in a UWB wireless network system may be provided.

According to the present disclosure, a method and apparatus for optimizing an address field included in a message by generating an address map and performing address indexing based thereon in a UWB wireless network system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a block configuration diagram of a wireless communication device according to an embodiment of the present disclosure.
FIG. 2 is a diagram for describing a HRP UWB PPDU format to which the present disclosure may be applied.
FIG. 3 is a diagram illustrating the RMARKER position according to an STS packet configuration in an HRP-ERDEV PPDU format to which the present disclosure may be applied.
FIG. 4 is a diagram for describing two-way ranging techniques to which the present disclosure may be applied.
FIG. 5 is a diagram for describing examples of a format of a RMI IE, a RCPCS IE, a RRMC IE and a RRTI IE to which the present disclosure may be applied.
FIG. 6 shows an example of a message sequence chart for SS-TWR applying a deferred reply time result to which the present disclosure may be applied.
FIG. 7 shows an example of a message sequence chart for SS-TWR applying an embedded reply time result to which the present disclosure may be applied.
FIG. 8 shows an example of a message sequence chart for SS-TWR using a SP3 packet to which the present disclosure may be applied.
FIG. 9 shows an example of a message sequence chart for DS-TWR to which deferred reply time information to which the present disclosure may be applied is applied.
FIG. 10 shows an example of a message sequence chart for DS-TWR to which embedded ranging time information to which the present disclosure may be applied is applied.
FIG. 11 is a diagram for describing the role of a device in a ranging procedure to which the present disclosure may be applied.
FIG. 12 shows examples of ARC IE, RDM IE, RBU IE, RR IE and SRRE IE formats to which the present disclosure may be applied.
FIG. 13 is a diagram for describing a ranging block structure and a ranging phase to which the present disclosure may be applied.
FIG. 14 shows examples of a timing diagram for various multi-device ranging to which the present disclosure may be applied.
FIG. 15 shows a timing diagram in an example of a block-based mode to which the present disclosure may be applied.
FIG. 16 is a diagram for describing examples of various transmission offsets to which the present disclosure may be applied.
FIG. 17 shows an example of a message sequence chart for one-to-many SS-TWR to which the present disclosure may be applied.
FIG. 18 shows an example of a message sequence chart for an SP3 one-to-many SS-TWR to which the present disclosure may be applied.
FIG. 19 illustrates a format of a scheduling information element (IE) to which the present disclosure may be applied.
FIG. 20 illustrates a format of a scheduling list element according to the value of a scheduling list type field to which the present disclosure may be applied.
FIG. 21 is a diagram illustrating an operation of a first device according to the present disclosure.
FIG. 22 is a diagram illustrating an operation of a second device according to the present disclosure.
FIG. 23 is a diagram illustrating an address map update and address index assignment according to the present disclosure.
FIG. 24 is a diagram illustrating frame exchange for an association process according to the present disclosure.
FIG. 25 illustrates the format of an association request command and an association response command according to the present disclosure.

FIG. 26 illustrates an address indexing-based scheduling IE format according to the present disclosure.

FIG. 27 illustrates an address indexing-based scheduling list element format according to the present disclosure.

FIG. 28 is a diagram illustrating an address indexing-based scheduling IE format according to the present disclosure.

FIG. 29 illustrates an operation on the transmitting device side performing a method according to the present disclosure.

FIG. 30 illustrates an operation on the receiving device side performing a method according to the present disclosure.

[Mode for Invention]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The examples of the present disclosure may be applied to various wireless communication systems. For example, the examples of the present disclosure may be applied to an IEEE 802.15 standard-based wireless network (e.g., Zigbee, Bluetooth, etc.). In particular, the examples of the present disclosure may be applied to an IEEE 802.15.4 standard-based wireless network, and further, may be applied to a newly proposed IEEE 802.15.4ab standard-based UWB wireless network, or a next-generation UWB wireless network after IEEE 802.15.4ab. A wireless communication system to which the examples of the present disclosure are applied is not limited to a wireless network of the IEEE 802.15 series, and may be applied to a wireless local area network (WLAN) technology or a Wi-Fi technology of the IEEE 802.11 series, and may be applied to a cellular wireless communication system (e.g., a technology of the Long Term Evolution (LTE) series of the 3rd Generation Partnership Project (3GPP) standard and a 5G New Radio (NR)).

The IEEE 802.15.4ab standard including a technology for further advancing an UWB PHY/MAC is under discussion. For example, in the IEEE 802.15.4ab standard, additional coding, a preamble and a modulation technique for supporting improved link budget and/or reduced air-time; an additional channel and operating frequency; an interference reduction technology to support higher device density and higher traffic use cases; improvement of accuracy, precision, reliability and interoperability for high-integrity ranging; a technique for reducing complexity and power consumption; definition of a hybrid operation with narrowband signaling to support an UWB; refined native discovery and connection setup mechanism; a sensing capability for supporting presence detection and environment mapping; a mechanism supporting high data-rate streaming allowing a minimum throughput of 50Mbps as well as low-power and low-latency streaming; support for peer-to-peer, peer-to-multi-peer, station-to-infrastructure protocol and infrastructure synchronization mechanism, etc. are discussed.

Hereinafter, technical features to which examples of the present disclosure may be applied will be described.

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

When devices 100 and 200) illustrated in FIG. 1 support ranging, it may be called a ranging-capable device (RDEV) or an enhanced ranging-capable device (ERDEV). For example, devices 100 and 200 illustrated in FIG. 1 may be called various terms such as a transmitting device, a receiving device, a transmitting RDEV, a receiving RDEV, a transmitting ERDEV, a receiving ERDEV, etc. For example, devices 110 and 200 may be called an initiator, a responder, an originator, a recipient, a controller, a controlee, etc. according to a role in a ranging operation. The role of one device is not fixed, but may be relatively determined according to a relationship with other devices. When one device interacts with multiple devices, one device may play multiple roles.

Referring to FIG. 1, the first device 100 and the second device 200 may transmit and receive a wireless signal through various UWB wireless network technologies (e.g., IEEE 802.15.4 series). The first device 100 and the second device 200 may include an interface for a medium access control (MAC) layer and a physical layer (PHY) that follow the regulations of the IEEE 802.15.4 standard. The IEEE 802.15.4-based PHY and MAC are included in an UWB subsystem, and an UWB subsystem may further include an UWB command interface (UCI) corresponding to an interface between an UWB controller and a host. An UWB subsystem may exchange a message with a host system through an UCI.

In addition, the first device 100 and the second device 200 may additionally support various communication standards (e.g., IEEE 802.15 series, IEEE 802.11 series, 3GPP LTE series, 5G NR series standards, etc.) technologies other than UWB wireless network technology. In addition, the device of the present disclosure may be implemented in various devices such as a mobile phone, a vehicle, a personal computer, augmented reality (AR) equipment, and virtual reality (VR) equipment, etc. In addition, the device of the present specification may support various communication services such as a voice call, a video call, data communication, autonomous-driving, machine-type communication (MTC), machine-to-machine (M2M), device-to-device (D2D), IoT (Internet-of-Things), etc.

The first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement an UWB wireless network technology (e.g., IEEE 802.15.4 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

The second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement an UWB wireless network technology (e.g., IEEE 802.15.4 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, the transceivers 106 and 206 of FIG. 1 may perform a transmission and reception operation of a signal (e.g., a packet or a physical layer protocol data unit (PPDU) conforming to IEEE 802.15.4, etc.). In addition, in the present disclosure, an operation in which various devices generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields included in the PPDU, 2) determining / configuring / acquiring time resources or frequency resources used for fields included in the PPDU; 3) determining / configuring / acquiring a specific sequence used for fields included in the PPDU action, 4) power control operation and/or power saving operation applied to a device, 5) operations related to ACK signal determination/acquisition/configuration/calculation/-decoding/encoding, etc. In addition, in the following example, various information (e.g., information related to fields / subfields / control fields / parameters / power, etc.) used by various devices to determine / acquire / configure / calculate / decode / encode transmission and reception signals may be stored in the memories 104 and 204 of FIG. 1.

In an UWB band, a device may perform medium access based on a Carrier Sense Multiple Access with Collision Avoidance (CSMA/CA) mechanism. A CSMA/CA mechanism may perform Clear Channel Assessment (CCA) that senses a wireless channel or medium for a predetermined time duration before a device starts transmission. Sensing may be performed, for example, by an energy detection (ED) method based on a predetermined threshold. As a result of sensing, if a medium is determined to be in an idle status, transmission is started through a corresponding medium. On the other hand, when a medium is detected to be occupied or busy, a device may attempt transmission after setting a delay period for medium access (e.g., a random backoff period) and waiting without starting transmission. By applying a random backoff period, multiple devices are expected to attempt transmission after waiting for a different time, so collision may be minimized.

In addition, when a superframe structure is applied, a slotted CSMA-CA mechanism may be applied to data transmission in the contention access period (CAP) of an active portion between the active portion and the inactive portion of an interval between beacons. A CSMA-CA mechanism may not be applied to data transmission in an active portion and in a contention free period (CFP). When a superframe structure is not applied, an unslotted CSMA-CA mechanism may be applied to the transmission of all data frames excluding an ACK frame for a data request command.

## Ranging Measurement

Ranging includes distance measurement between two devices, and a device having a ranging capability may be referred to as a ranging-capable device (RDEV) or an enhanced ranging-capable device (ERDEV).

FIG. 2 is a diagram for describing a HRP UWB PPDU format to which the present disclosure may be applied.

FIGS. 2(a) to 2(g) show the encoding process of a HRP UWB PPDU. Through an encoding process, a HRP UWB PPDU having a format including a synchronization header (SHR), a PHY header (PHR) and a PHY payload field may be generated.

FIG. 2(a) shows a PHY service data unit (PSDU) received from a MAC through a PHY service access point (SAP). A PSDU may include a MAC PDU.

In FIG. 2(b), Reed-Solomon encoding may be applied to a PSDU, generating a PHY payload field. A PHY payload field in FIG. 2(b) is non-spread, and corresponds to a status before convolution encoding is applied.

In FIG. 2(c), a PHR field may be added in front of a PHY payload field. A PHR field may have a size of 19 bits of bit 0 to bit 18. For example, bit 0-1 may correspond to a data rate field, bit 2-8 may correspond to a frame length field, bit 9 may correspond to a ranging field, bit 10 may be reserved, bit 11-12 may correspond to a preamble duration field and bit 13-18 may correspond to a single error correct, double error detect (SECDED) field. A data rate field may indicate a data rate value applied to a PHY payload field. A frame length field may indicate the length of a PSDU. A ranging field may indicate whether a corresponding frame is a ranging frame (RFRAME). A preamble duration field may indicate the length (symbol unit) of the SYNC field of a SHR.

In FIG. 2(d), convolution encoding may be applied to generate a coded PHY payload field, and spreading may be applied to a PHY payload field in FIG. 2(e).

In FIG. 2(f), a SHR may be added in front of a PHR. A SHR field may include a SYNC field (or a preamble code) and a start-of-frame delimiter (SFD) field.

In FIG. 2(g), modulation is applied to SHR, PHR and PHY payload fields, and a PPDU encoding procedure is terminated. A basic coding rate may be applied to a SHR field. The burst position modulation-binary phase shift keying (BPM-BPSK) at a coding rate of 850kb/s or 110kb/s may be applied to a PHR field. BPM-BPSK at a coding rate indicated in a PHR may be applied to a PHY payload field. For example,

The PHR field may have a format including data rate (2 bits), frame length (7 bits), ranging (1 bit), reserved (1 bit), preamble duration (2 bits), and SECDED (6 bits) for base pulse repetition frequency (BRFP) mode, or may have a format including A1 (1 bit), A0 (1 bit), PHY payload length (10 bits), ranging (1 bit), and SECDED (6 bits) for higher pulse repetition frequency (HPRF) mode. The A1 and A0 fields may also indicate the size of an additional gap between the payload and the STS. For the PHR field, in BPRF mode, BPM-BPSK (burst position modulation-binary phase shift keying) with a coding rate of 850 kb/s or 6.8 Mb/s may be applied, in HPRF mode, modulation with a coding rate of 3.9 Mb/s, 7.8 Mb/s, 15.6 Mb/s, or 31.2 Mb/s may be applied, and in other cases, BPM-BPSK with a coding rate of 850 kb/s or 110 kb/s may be applied. For the PHY payload field, in HPRF mode, modulation with a coding rate of 6.8 Mb/s, 7.8 Mb/s, 27.2 Mb/s, or 31.2 Mb/s may be applied, and in other cases, BPM-BPSK with a coding rate indicated in the PHR may be applied.

FIG. 3 is a diagram illustrating the RMARKER position according to an STS packet configuration in an HRP-ERDEV PPDU format to which the present disclosure can be applied.

A scrambled timestamp sequence (STS) field may include a sequence of pseudo-randomized pulses. For example, a STS may include a sequence of advanced encryption standard (AES)-128-based pseudo-randomized pulses, and may be utilized for accurate localization in the localization technology based on the spread spectrum technology in UWB communication.

A PPDU STS packet structure configuration may be different according to whether a STS field is included and its location.

FIG. 3(a) shows a format corresponding to STS packet configuration 0 (i.e., a STS field does not exist in a PPDU). This format may be defined in a mandatory way.

FIG. 3(b) shows a format corresponding to STS packet configuration 1 (i.e., a STS field is located immediately after a SFD field and before a PHR field). This format may be defined in a mandatory way.

FIG. 3(c) shows a format corresponding to STS packet configuration 2 (i.e., a STS field is located after a PHY payload field). This format may be defined in an optional way.

FIG. 3(d) shows a format corresponding to STS packet configuration 3 (i.e., a STS field is located immediately after a SFD field, a PHR field does not exist, and a data field (i.e., a PHY payload field) does not exist). This format may be defined in a mandatory way.

A PPDU format like examples in FIG. 3 may be referred to as a HRP-ERDEV PPDU format. In FIG. 3, an arrow indicates a ranging marker (RMARKER) reference position in each format. RMARKER may be a reference for timestamp measurement or ranging counter.

For example, RMARKER may be defined as a time at which the start of the first symbol following the SFD of RFRAME is at a local antenna. The next higher layer may estimate a relative clock offset between local reference clocks on a remote transmitting end and a receiving end based on the reporting of a SRMARKER receiving ranging counter value for at least one STS segment.

A ranging counter supported by RDEV corresponds to a set of behavioral properties and capabilities of a RDEV calculating a ranging counter value. A ranging counter value is an unsigned integer, and may be defined as a length of at least 32 bits. The unit of a ranging counter is defined as $2^{-7}$ of a 499.2MHz chipping period for a HRP UWB PHY, and is approximately 15.65 picoseconds(ps), and is defined as $20^{-20}$ of a 1MHz basic chipping rate for a LRP UWB PHY, and is approximately 0.9537ps.

A ranging capability may be enabled in a RDEV by using a MAC common part sublayer (MCPS)-DATA.request primitive and a MAC sublayer management entity (MLME)-RX-ENABLE.request primitive. A primitive may mean a set of instructions or parameters exchanged between sublayer entities or layers within one device. For example, an originator may request a ranging capability through a MCPS-DATA.request primitive, and a ranging capability may be enabled in a recipient through a MLME-RX-ENABLE.request primitive.

Ranging and Localization Method

The ranging and localization methods supported by RDEVs and ERDEVs may be based on a time-stamping capability. As a time-based technique, single-sided two-way ranging (SS-TWR), double-sided two-way ranging (DS-TWR), and one-way ranging/time difference of arrival (OWR/TDOA) are described below.

FIG. 4 is a diagram for describing two-way ranging techniques to which the present disclosure may be applied.

In the example of FIG. 4(a), SS-TWR includes the measurement of the round-trip delay of a single message from one device to another device and a response sent to a sending device. Device A initiates message exchange, device B sends a response, and T_prop corresponds to the propagation time of RMARKER between devices.

Each device precisely measures the transmission and reception time of a message frame, and accordingly, may calculate T_round and T_reply by simple subtraction. The resulting TOF may be estimated as ^T_prop by the following equation.

【Equation 1】

$$\hat{T}_{prop} = \frac{1}{2}(T_{round} - T_{reply})$$

When a device may estimate a relative clock offset between itself and a remote device, the accuracy of TOF may be improved by the following equation.

【Equation 2】

$$\hat{T}_{prop} = \frac{1}{2}(T_{round} - T_{reply} - (1 - C_{offs}))$$

Here, C_offs corresponds to a value obtained after the receiver of device A measures a relative clock offset between itself and the transmitter of remote device B.

In the example of FIG. 4(b), DS-TWR corresponds to the extension of SS-TWR, and two round-trip times may be used and combined to calculate a TOF result by reducing an error for a case where an uncorrected clock frequency offset exists although a response delay is long. Device A initiates the first round-trip time measurement, and device B responds to it, and then device B initiates the second round-trip time measurement, and device A responds to it, so the entire DS-TWR exchange may be completed. T_prop corresponds to the propagation time of RMARKER between devices.

Each device precisely measures the transmission and reception time of a message frame, and accordingly, may calculate T_round and T _reply by simple subtraction. The resulting TOF may be estimated as ^T_prop by the following equation.

【Equation 3】

$$\hat{T}_{prop} = \frac{(T_{round1} \times T_{round2} - T_{reply1} \times T_{reply2})}{(T_{round1} + T_{round2} + T_{reply1} + T_{reply2})}$$

The example of FIG. 4(c) corresponds to the reduction of DS-TWR through four messages in FIG. 4(b) to three messages. In other words, the response of the first round-trip time measurement may be used as the initiation message of the second round-trip time measurement.

Next, a TDOA method is described. TDOA corresponds to a technique for locating a wireless device (e.g., a radio frequency identification (RFID) device) based on the relative arrival time of a single message or multiple messages. OWR may be used for TDOA. There are two cases of TDOA. In one case, a message is periodically broadcast by a mobile device, and a time at which a broadcast message arrives at multiple fixed nodes synchronized in a predetermined manner may be compared. Generally, a message transmitted by a mobile device may be referred to as a blink. In another case, multiple synchronized nodes may sequentially broadcast a message according to a transmission time offset known to each other. For any pair of fixed synchronized nodes, a difference in the arrival time of blinks in the first case, or a difference in the arrival time of broadcast messages received by a mobile device in the second case locates a mobile device on a hyperbolic surface. By combining results from such multiple pairs, an intersection point between sets of hyperbolic surfaces may be derived, and accordingly, the location of a mobile device may be specified. In the second case, a transmission offset may be considered when calculating a difference in the arrival time of messages from synchronized nodes.

RFID devices may typically use the shortest blink message as much as possible (e.g., a multipurpose frame) to reduce power consumption. A multipurpose frame may be 12 octets long, and may include a short frame control field and a sequence number field, and may not include a destination address field, an extended source address field and a frame check sequence (FCS).

The synchronization of fixed nodes may be performed by the wired distribution of clock signals, and a wireless synchronization technique may be applied. The UWB messages (and known/pre-measured TOF) transmitted between fixed nodes may be used to calculate a relative clock frequency offset and a drift between fixed nodes. This information may be used to correct the arrival time of blink messages based on a common time, making TDOA data meaningful.

Set-up Procedure before Ranging Exchange

In order to reduce power consumption, disabling ranging may be defined as a default status. Enabling ranging in all RDEVs participating in TWR exchange may be performed by a higher layer. In addition, when an optional capability is used, it may be assumed that predetermined coordination for preamble and channel selection is performed before TWR exchange.

Finish-up Procedure after Ranging Exchange

At the end of TWR exchange, each device may have transmit (TX) and receive (RX) ranging counter values related to round-trip time measurement or reply time. In order to calculate TOF, all of these values are required in a node where calculation is performed. For this purpose, out-of-band (OOB) signaling, a custom message, a ranging measurement information (RMI) information element (IE), etc. may be used.

FIG. 5 is a diagram for describing examples of a format of a RMI IE, a RCPCS IE, a RRMC IE and a RRTI IE to which the present disclosure may be applied.

FIG. 5(a) shows an example of a RMI IE format.

A RMI IE may be used to send at least one ranging-related measurement to at least one device. A RMI IE content field may have the same format as the example of FIG. 5(a).

1, a value of a reply time present field, may indicate that a RX-to-TX (or TX-to-RX) reply time field is present in each RMI list element, and a value of 0 may indicate that it is not present. A RX-to-TX (or TX-to-RX) reply time may correspond to T_reply described by referring to FIG. 4.

1, a value of a round-trip time present field, may indicate that a TX-to-RX round-trip time field is present in each RMI list element, and a value of 0 may indicate that it is not present. A TX-to-RX round-trip time may correspond to T _round described by referring to FIG. 4.

1, a value of a TOF present field, may indicate that a TOF field is present in each RMI list element, and a value of 0 may indicate that it is not present.

1, a value of an AOA azimuth present field, may indicate that an AOA azimuth field is present in each RMI list element, and a value of 0 may indicate that it is not present.

1, a value of an AOA elevation present field, may indicate that an AOA elevation field is present in each RMI list element, and a value of 0 may indicate that it is not present.

1, a value of an AOA figure of merit (FOM) present field, may indicate that an AOA azimuth FOM field is present in each RMI list element when an AOA azimuth field is present, and may indicate that an AOA elevation FOM field is present in each RMI list element when an AOA elevation field is present, and a value of 0 may indicate that an AOA azimuth FOM field or an AOA elevation FOM field is not present.

An address size specifier field may specify the size of addresses used in a RMI list field (e.g., 2 or 8).

0, a value of a deferred mode field, may indicate that a corresponding RMI IE is embedded into RFRAME, and a value of 1 may indicate that a corresponding RMI IE is included in a deferred message transmitted in the next measurement report phase.

A RMI list length field may specify the number of elements of a RMI list field. Fields included in a RMI list field are as shown in FIG. 5(a).

FIG. 5(b) shows an example of a RCPCS IE format.

A ranging channel and preamble code selection (RCPCS) IE may be used to indicate channel selection for dynamic preamble code and channel selection (DPS) and/or selection of a TX/RX preamble code. DPS may include changing a long preamble to protect against an attacking device intercepting ranging. A RCPCS IE content field may have the same format as the example of FIG. 5(b).

1, a value of a CCI present (CCIP) field, may indicate that a CCI field is present, and a value of 0 may indicate that it is not present.

1, a value of a DPS Duration Present (DDP) field, may indicate that a DPS duration field is present, and a value of 0 may indicate that it is not present.

1, a value of a preamble sequence selection present (PSP) field, may indicate that preamble sequence selection fields, i.e., a TX preamble code field, a RX preamble code field and a preamble symbol repetitions (PSR) field, are present, and a value of 0 may indicate that they are not present.

A channel number field may indicate an UWB channel number for forthcoming ranging exchange.

A channel configuration interval (CCI) field may specify a channel configuration interval. A channel configuration interval may correspond to a time in the unit of a ranging scheduling time unit (RSTU) between the transmission of a corresponding IE and reconfiguration for a specified channel.

A RSTU corresponds to 416 chips (approximately 833.33ns) (416 chips = 416 / 499.2*106) for a HRP UWB PHY. A RSTU corresponds to 1 microsecond (us) (= 1 chip at a 1MHz basic chipping rate) for a LRP UWB PHY.

A DPS duration field may specify the effective time duration of DPS. A corresponding duration may be specified in the unit of a RSTU for an ERDEV and in the unit of a symbol for a non-ERDEV.

A TX preamble code field may indicate a DPS preamble code that will be used for transmission during the forthcoming ranging exchange on a side transmitting a corresponding IE.

A RX preamble code field may indicate a DPS preamble code that will be used for reception during the forthcoming ranging exchange on a side transmitting a corresponding IE.

A PSR field may indicate the number of preamble symbol repetitions that will be used for the SYNC of each RFRAME of the forthcoming ranging exchange.

A MLMR-DPS.request and MLME-DPS.confirm primitive may be applied to the optional DPS mode of ranging. The ConfigTime parameter of a MLME-DPS.request primitive may be used to specify a future time to which a preamble code and/or a channel number will be applied. A time to which a DPS change will be applied may be exchanged through the CCI field of a RCPCS IE.

Basic Ranging Exchange

A recipient may turn on or enable ranging in a MAC on a recipient side based on a MLME-RX-ENABLE.request primitive from the next higher layer.

After ranging is turned on in a MAC on a recipient side (i.e., receiving a MLME-RX-ENABLE.request primitive), all received RFRAMEs may generate a TX/RX ranging counter.

An originator may transmit data to a recipient based on a MCPS-DATA.request primitive.

A recipient may generate a ranging report for all RFRAMEs and transmit an ACK frame to an originator.

An originator may enable Tx-to-Rx turnaround (i.e., repeat data transmission and ACK reception) by receiving an ACK frame from a recipient. In this regard, the next higher layer may not be involved.

A ranging report may include the issue of a MCPS-DATA.confirm primitive on an originator side (i.e., reporting the result of invoking a MCPS-DATA.request primitive) and the issue of a MCPS-DATA.indication primitive on a recipient side (i.e., indicating the reception of data from an originator, or indicating that ranging information according to the reception of a packet from an originator is available).

Until ranging is disabled, the generation of the ranging report of a recipient, the transmission of ACK to an originator, the enabling of Tx-to-Rx turnaround based on the reception of the ACK frame of an originator and a ranging report may be repeated.

Ranging Procedure

First, the control of ranging and the transmission (transfer) of results are described.

A measurement value may be exchanged between RDEVs to complete ToF calculation. For this purpose, TWR may be controlled through information elements and ranging data may be exchanged between RDEVs.

Specifically, information elements may be used for the control of TWR and the transmission of ranging data between RDEVs participating in ranging exchange. For various ranging methods, according to a required use case, a measurement result by both devices may be combined to complete TOF calculation between RDEVs participating in ranging exchange. In other words, one device may transmit its ranging measurement result to another device. Information elements may be specified to provide a mechanism for controlling TWR and support the transmission of ranging information between devices participating in ranging exchange. In order to ensure the integrity of corresponding information transmission, a secure private data communication capability may be used.

Hereinafter, a ranging procedure for SS-TWR that applies a deferred reply time result is described.

FIG. 6 shows an example of a message sequence chart for SS-TWR applying a deferred reply time result to which the present disclosure may be applied.

In a message sequence chart for ranging exchange, RRMC IE(0) may represent a RRMC IE including a ranging control information field with a value of 0 (i.e., a ranging initiation message for SS-TWR). The Acknowledgment Request (AR) field of a MAC header may represent whether ACK is requested.

The next higher layer of an initiator may have sufficient information for calculating TOF between devices by using the above-described equation at a time when receiving a RMI IE (e.g., FIG. 5(a)).

The ranging exchange initiation of an initiator may invoke a MCPS-DATA.request primitive to request ranging reply time information and transmit a ranging frame including a Ranging Request Measurement and Control (RRMC) information element including a ranging control information field.

FIG. 5(c) shows an example of a RRMC IE format.

A RRMC IE may transmit a ranging request and include information controlling a ranging procedure.

The reply time request, round-trip time request, TOF request, AOA azimuth request and AOA elevation request fields of a RRMC IE format may indicate that corresponding information is requested when that value is 1 and may indicate that corresponding information is not requested when that value is 0.

A ranging control information field may indicate that a corresponding frame is a ranging initiation message for SS-TWR when that value is 0, that a corresponding frame is a response to a ranging initiation message for SS-TWR when that value is 1, that a corresponding frame is a ranging initiation message for DS-TWR when that value is 2 and that a corresponding frame is continuing DS-TWR and initiates the second round-trip time measurement when that value is 3.

A address size field may specify the size of addresses used in a RRMC address list field. When the value of an address size field is 0, all addresses of a RRMC address list element may correspond to a short address. When the value of an address size field is 1, all addresses of a RRMC address list element may correspond to an extended address.

A RRMC address list length field may indicate the number of addresses of a RRMC address list field. When an address is not provided (e.g., for unicast ranging where a target device may be identified by a destination address in a MAC header (MHR)), a RRMC address list length field may be omitted.

When a RRMC IE is a broadcast message, and when a transmitter wants to receive a response to a ranging request from all devices, RRMC address list length and RRMC address list fields may be omitted. Alternatively, when a transmitter wants to receive a response to a ranging request from specific devices (or a device set), RRMC address list length and RRMC address list fields may be used to select a device set for a response.

For SS-TWR, since an initiator generally calculates TOF, a responder may request a TOF result by setting the TOF request field of a RRMC IE included in a response message.

For DS-TWR, since a responder generally calculates TOF, an initiator may request a TOF result by including a RRMC IE in two messages transmitted to perform DS-TWR exchange.

When an initiator requests different information from multiple responders, multiple RRMC IEs may be included in one broadcast message.

A RRMC address list field may include a list of addresses for which a RRMC IE heads.

In relation to a ranging report (or a response ranging frame), an initiator side may complete round-trip time measurement, and a MCPS-DATA.confirm primitive may provide an initiator side with a ranging report defining a round-trip time. On a recipient side, a MCPS-DATA.indication primitive may provide a ranging report on a response side defining a reply time for round-trip time measurement.

FIG. 5(d) shows an example of a Ranging Reply Time Instantaneous (RRTI) IE format.

In association with at least one frame including a RRMC IE where a reply time request field is set as 1, a RRTI IE may be included in a corresponding response frame to transmit the reply time of a response frame.

An address size specifier field may be defined as in the following table.

[Table 1]

| A value of an address size specifier field | Address Size |
|---|---|
| 00 | 0 Octet, no address |
| 01 | Reserved |
| 10 | 2 Octets, short address (16 bits) |
| 11 | 8 Octets, extended address (64 bits) |

A RRTI list length field may indicate the number of elements in a RRTI list field. A RRTI list field may include RRTI list elements.

The RX-to-TX reply time field of a RRTI list field may be set as a value indicating a difference between the transmission time of a response RFRAME including a RRTI IE and a reference time specified by a higher layer (i.e., T_reply in the example of FIG. 4(a)). A reference time may correspond to the reception time (based on RMARKER) of RFRAME including a RRMC IE where a reply time request field is set as 1.

The address field of a RRTI list field may be set as the address of a device transmitting a RRMC IE requesting a reply time. An address field may be omitted in unicast ranging. In scheduled multi-node ranging, when the reply time of other RDEVs are negotiated in advance and the order is determined, an address field may be omitted.

Hereinafter, a ranging procedure for SS-TWR that applies an embedded reply time result is described.

FIG. 7 shows an example of a message sequence chart for SS-TWR applying an embedded reply time result to which the present disclosure may be applied.

For SS-TWR applying a reply time result, ranging exchange may be initiated by a ranging frame requesting ranging reply time information and including a RRMC IE where a ranging control information field is set as 0. A responding device may complete round-trip measurement by transmitting a response frame including an embedded ranging reply time instantaneous (RRTI) IE. When a device has a capability to generate a RRTI IE, the number of messages required for ranging measurement may be minimized, so power may be saved. However, it may take time to calculate the arrival time of a received ranging message and prepare a RRTI IE value. In some cases, this time may be known a priori in an OOB manner, and a ranging reply time negotiation (RRTN) IE may provide a device with a mechanism that indicates a preferred reply time, i.e., a time required to prepare a frame including a RRTI IE. When this time is known, a ranging initiating device may expect a response message after a specific time, and may save energy by delaying turning on a receiver until then. This may be applied to both SS-TWR and DS-TWR ranging exchanges.

In FIG. 7, RRMC IE(0) represents a RRMC IE including a ranging control information field with a value of 0. The communication of a RRTN IE in a box indicated with dotted lines may be performed at any convenient time before ranging exchange is initiated, or preferred reply time information may be pre-known or exchanged through OOB. When receiving a MCPS-DATA.indication primitive including the RRTI IE of a responder, the next higher layer of an initiator may have sufficient information to calculate TOF between two devices according to the above-described equation.

Hereinafter, a ranging procedure for SS-TWR to which a fixed reply time is applied is described.

FIG. 8 shows an example of a message sequence chart for SS-TWR using a SP3 (scrambled timestamp sequence packet configuration option three) packet to which the present disclosure may be applied.

When a responding device is capable of precise control over the transmission time of its response message to the arrival time of a ranging initiation message, a reply time (i.e., Treply) may have a fixed known value agreed between devices participating in ranging exchange. In this case, it may not be required to embed Treply in a response message or to transmit it separately in an additional message. The accuracy of resulting ranging may depend on how much precise control a responding device has over the transmission time of its response message. For example, each 1 ns error in TOF may correspond to a ranging error of about 30cm.

HRP-ERDEV PPDU format SP3 may be used for a fixed reply time.

In the example of FIG. 8, an initiation message in a box indicated with dotted lines may represent communication for agreement and coordination for all other parameters required to allow communication to proceed and the use of a SP3 packet between devices. In the example of FIG. 8, only a single message is indicated, but there may be a series of messages in each direction for an agreement on all parameters. For example, a RRNT IE may be used to agree on a fixed reply time.

In each device, the next higher layer may configure a SP3 packet format in all devices, and may appropriately configure an operation by using a MLME-STS.request primitive in order to set a personal area network information base (PIB) attribute (e.g., phyHrpUwbStsKey, phyHrpUwbStsVCounter, phyHrpUwbStsVUpper96, etc.). When a higher layer selects a SP3 packet configuration, subsequent MCPS-DATA primitives are related to a SP3 packet until a higher layer uses a MLME-STS.request primitive to change a packet configuration.

A MCPS-DATA.request primitive may be used to initiate ranging exchange, and in a corresponding mode, a PPDU may not convey MAC data. Although not shown, it may be assumed that the invocation of a MLME-RXENABLE.request primitive turns on a receiver at an appropriate time to receive a PPDU. Since a PHY is configured for a SP3 packet, a PHY may notify a MAC layer of the reception of a PPDU at the end of a scrambled timestamp sequence (STS), and a MAC similarly aware of a SP3 configuration may deliver the RxRangingCounter value of a RangingReportDescriptor parameter of a MCPS-DATA.indication primitive. In addition, when it is assumed that the RangingStsFom of RangingReportDescriptor is acceptable, a higher layer may initiate a response by invoking a MCPS-DATA.request primitive specifying RangingTxTime according to an agreed fixed reply time.

When a SP3 packet response is received in an initiating device, and it is assumed again that the RangingStsFom of the RangingReportDescriptor parameter of a MCPS-DATA.indication primitive is acceptable, an initiator side may have sufficient information to calculate TOF between devices according to the above-described equation based on a known fixed reply time.

Ranging exchange may be repeated multiple times until higher layers are mutually agreed. In order to resume PHY and MAC data interactions, the next higher layer may use a MLME-STS.request primitive to restore a STS packet configuration to a value that allows such data interactions. It is shown in a box indicated with final dotted lines in FIG. 8.

A LRP-ERDEV may also support challenge-response ranging to which a fixed reply time is applied in order to remove the need for a data message to convey a reply time.

Hereinafter, a DS-TWR ranging procedure to which deferred reply time information is applied is described.

FIG. 9 shows an example of a message sequence chart for DS-TWR to which deferred reply time information to which the present disclosure may be applied is applied.

DS-TWR may essentially include the completion of SS-TWR exchange initiated in each device, and a combination of its results. DS-TWR may be initiated by the next higher layer transmitting a ranging data frame conveying a RRMC IE (i.e., RRMC IE(2)) where the value of a ranging control information field is set as 2. This frame and its ACK may define the first round-trip time measurement. The delivery of a RRMC IE in a MCPS-DATA.indication primitive may be notified to the next higher layer to initiate the second round-trip time measurement by the transmission of a data frame in another direction. This data frame may include a RRMC IE (i.e., RRMC IE(3)) where the value of a ranging control information field is set as 3 to indicate the continuation of exchange, and both reply time request and round-trip time request fields may be set as 1 to request a reply time and the result of the first round-trip time measurement. ACK for this message may complete the second round-trip time measurement. A subsequent message from an initiator may convey the first round-trip time measurement result and the reply time of the second round-trip time measurement through a RMI IE. When receiving a MCPS-DATA.indication primitive (including a RMI IE), a responder may have sufficient information to calculate TOF between devices according to the above-described equation. The subsequent reporting of a ranging result to an initiator side by using a RMI IE may be performed according to the value of the TOF request field of an initiating RRMC IE.

Hereinafter, a DS-TWR ranging procedure that applies embedded ranging time information is described.

FIG. 10 shows an example of a message sequence chart for DS-TWR to which embedded ranging time information to which the present disclosure may be applied is applied.

For 3-message DS-TWR exchange in FIG. 4(c) described above, it is required that an initiator side may embed a reply time as a part of the completion of the second round-trip time measurement. In the example of FIG. 10, DS-TWR may be initiated by RFRAME conveying a RRMC IE (i.e., RRMC IE(2)) where a TOF request field is set as 0 (i.e., an initiator side does not request ranging report) and a ranging control information field is set as 2.

A responder side may complete the first round-trip time measurement, and initiate the second measurement by using RFRAME conveying a RRMC IE (i.e., RRMC IE(3)) where a ranging control information field is set as 3 to indicate the continuation of exchange. In this RRMC IE, both reply time request and round-trip time request fields are set as 1, so the result of the first round-trip time measurement and a reply time for the second round-trip time measurement may be requested. An initiator may complete exchange by transmitting a final RFRAME that includes the result of the first round-trip time measurement in a RMI IE and the reply time of the second round-trip time measurement in a RRTI IE.

When receiving the MCPS-DATA.indication primitive that is a higher layer, a responder may have sufficient information to calculate TOF between devices according to the above-described equation. When the initiator of ranging exchange wants a corresponding result, an initiator may set the TOF request field of an initiating RRMC IE as a value requesting a responder side to send a result in the RMI IE of a subsequent message at the end of the exchange.

Hereinafter, a different procedure for the coordination of a RDEV and an ERDEV will be described.

For the successful interoperation of a HRP-ERDEV when a STS is used, a transmitter and a receiver need to be arranged for a seed (i.e., a STS key and data value V) used in the generation of a STS in a transmitter and used in the generation of a sequence for correlating with a STS received in a receiver. For the coordination of these values, a secure private data communication capability may be used, and a seed may be transmitted between devices by using a Ranging STS Key and Data (RKSD) IE. A counter value in a RSKD IE may relate to a current packet or a future packet as indicated by the current packet (CP) field of a corresponding IE. A higher layer may use received RSKD IE information and configure a STS seed appropriately for future packet transmission and reception (e.g., through a PIB attribute such as phyHrpUwbStsKey, phyHrpUwbStsVUpper96, phyHrpUwbStsVCounter, etc.). The header IE version of a RSKD IE may be used to synchronize a STS generator by using information transmitted with a secured payload IE and data.

When a frame including a RSKD IE header IE is received, a corresponding IE may be delivered to the next higher layer to set an attribute such as phyHrpUwbStsKey, phyHrpUwbStsVUpper96, phyHrpUwbStsVCounter, etc. appropriately for STS generation. When a frame including a RSKD IE header IE does not pass the incoming security processing, for example, when a receiver does not have a key to validate a message integrity code (MIC), a RSKD IE may be delivered to the next higher layer through the HeaderIeList parameter of a MLME-COMM-STATUS.indication primitive.

Multi-node Ranging

Multi-node ranging may include ranging between at least two devices. Each device may perform a role in multi-node ranging.

FIG. 11 is a diagram for describing the role of a device in a ranging procedure to which the present disclosure may be applied.

A controller may correspond to a ERDEV that transmits a ranging control message (RCM) and defines a ranging parameter. A RCM may correspond to a data frame including an advanced control (ARC) IE. A controlee may correspond to an ERDEV that uses a ranging parameter provided by a controller through a RCM. An initiator corresponds to an ERDEV that sends the first message of ranging after a RCM and initiates ranging exchange, and a controller or a controlee may be an initiator. A responder corresponds to an ERDEV that responds to a ranging initiation message received from an initiator, and a controller or a controlee may be a responder.

The next higher layer of a controller may determine a ranging parameter and the role of an ERDEV participating in ranging exchange (i.e., an initiator or a responder).

For example, FIG. 11(a) shows an example in which a controller transmitting a ranging control message (RCM) is an initiator transmitting a ranging initiation message in ranging exchange and a controlee receiving a RCM is a responder receiving a ranging initiation message and transmitting a ranging response message in ranging exchange. FIG. 11(b) shows an example in which a controller transmitting a RCM is a responder receiving a ranging initiation message and transmitting a ranging response message in ranging exchange and a controlee receiving a RCM is an initiator transmitting a ranging initiation message in ranging exchange.

A ranging session may be defined as a group of ERDEVs involved in a consecutive ranging procedure configured by the initial set of a ranging parameter. A ranging session may include only one controller and at least one initiator. A controller may configure an initial ranging parameter and update a parameter during a ranging session.

FIG. 12 shows examples of ARC IE, RDM IE, RBU IE, RR IE and SRRE IE formats to which the present disclosure may be applied.

FIG. 12(a) shows an example of a ARC IE format.

A controller may use an ARC IE to transmit ranging configuration information to a controlee. An ARC IE may be transmitted to one controller through a unicast frame and to a plurality of controllers through a broadcast frame.

A controlee may use an ARC IE to transmit its preferred ranging parameter to a controller together with a Ranging Change Request (RCR) IE.

Each field of an ARC IE may be defined as follows.

[Table 2]

| Value of multi-node mode field | Meaning |
|---|---|
| 0 | Single device-to-single device (unicast) |
| 1 | Multi-node one-to-many |
| 2 | Multi-node many-to-many |
| 3 | Reserved |

[Table 3]

| Value of ranging round usage field | Meaning |
|---|---|
| 0 | OWR(one-way ranging) |
| 1 | SS-TWR(single-sided two-way ranging) |
| 2 | DS-TWR(double-sided two-way ranging) |
| 3 | Ranging ancillary information exchange |

[Table 4]

| Value of STS packet configuration field | Resulting STS packet configuration |
|---|---|
| 0 | A STS field is not included in a PPDU (FIG. 3(a)). |
| 1 | STS Packet Structure #1 (FIG. 3(b)) |
| 2 | STS Packet Structure #2 (FIG. 3(c)) |
| 3 | STS Packet Structure #3 (FIG. 3(d)) |

[Table 5]

| Value of a schedule mode field | Selected ranging schedule mode and operation |
|---|---|
| 0 | Contention-based ranging is used for subsequent ranging rounds, and a RDM IE and a RCPS IE are used for control participation. |
| 1 | Scheduled-based ranging is used for subsequent ranging rounds, and participation in ranging and time slot allocation is fixed or controlled through the use of a RDM IE. |

A contention-based ranging type corresponds to a method in which a controller is unaware of the presence or number of controlees and accordingly, ERDEVs perform ranging in a contention-based manner. A collision may occur, so it may be required to filter an incorrect or wrong ranging result from a higher layer. An initiator or a responder may compete to perform transmission within an appropriate time slot. When an initiator and a responder compete, a ranging contention phase structure (RCPS) IE may be added to an ARC IE to designate a different phase (e.g., distinguished through a slot index) in a RCM. When a RCM is received, a controlee may know that it was selected to participate in a ranging round. A time-scheduled ranging type corresponds to a method in which a controller knows all controlees and designates the exact schedule of ranging transmission. A controller may select devices participating in ranging, give a ranging role (i.e., an initiator or a responder) and allocate a time slot through a ranging device management (RDM) IE. If the role and transmission schedule of a device are pre-designated by an OOB signaling method, etc., a RDM IE may be omitted.

[Table 6]

| Value of deferred mode field | Whether a deferred mode is allowed in measurement report |
|---|---|
| 0 | The round-trip measurement is completed immediately by embedding a RRTI IE in a response frame. |
| 1 | The round-trip time or reply time is reported in a measurement report phase. |

[Table 7]

| Value of time structure indicator field | Selected ranging time structure operation |
|---|---|
| 0 | A time structure is interval-based, and a RIU IE is used to control ranging interval update. |
| 1 | A time structure is block-based, and a RR IE is used to control ranging interval update. |

A RCM validity rounds field indicates the number of consecutive ranging rounds controlled by a RCM, which may be used to define a ranging round set. A multiple message receipt confirmation request (MMRCR) field may indicate whether multiple message receipt confirmation is requested.

A content control field may represent whether other fields are present in an ARC IE. Bits 0, 1, 2 and 3 of a content control field correspond to a field indicating whether a ranging block duration (RBD) field is present (i.e., RBDP), a field indicating whether a ranging round duration (RRD) field is present (i.e., RRDP), a field indicating whether a ranging slot duration (RSD) field is present (i.e., RSDP) and a field indicating whether a session ID field is present (i.e., SIP), respectively. Bits 4-7 of a content control field may be reserved.

A RBD field may indicate the duration (RSTU unit) of a ranging block.

A RRD field may indicate the duration of a ranging round (a ranging slot unit, i.e., the number of ranging slots in a ranging round).

A RSD field may indicate the duration (RSTU unit) of a ranging slot.

A SID field may indicate a unique identifier for each controller.

When a ranging block structure is the same as a previously specified duration, at least one of the duration fields (e.g., a RBD field, a RRD field, a RSD field) may not be present in the ACI IE of a current RCM. Even in this case, other fields (e.g., a schedule mode field, a STS packet configuration field, etc.) may be used to update a corresponding ranging parameter.

FIG. 12(b) shows an example of a ranging device management (RDM) IE format.

A RDM IE may be used to exchange scheduling information between ERDEVs for a set of ranging rounds designated in a RCM with the same controller.

A slot index usage (SIU) field may indicate whether to use the slot index of a RDM list element. When a value thereof is 0, a RDM IE may be used to allocate a ranging role (i.e., an initiator or a responder) to controlee(s) for contention-based ranging. When a value thereof is 1, a RDM IE may be used to allocate a time slot and allocate a ranging role to controlee(s) for scheduling-based ranging.

An address size field represents the size of an address used for a RDM list field, and 0 may indicate that a short address (16 bits) is used and 1 may indicate that an extended address (64 bits) is used.

A RDM list length field may indicate the number of RDM list elements.

The ranging role field of a RDM list may indicate an initiator or a responder. The ranging slot index field of a RDM list may indicate a slot index allocated to the device of a corresponding address. The address field of a RDM list may indicate the address of each device participating in ranging.

FIG. 12(c) shows an example of a ranging block update (RBU) IE format.

A RBU IE may be used by a controller to notify controlee(s) of an updated ranging block structure.

A relative ranging block index field may indicate the number of residual ranging blocks according to a current configuration before switching to a new configuration.

An updated block duration field may indicate the duration (RSTU unit) of a new ranging block.

An updated ranging round duration field may indicate a ranging round duration value that is an integer multiple of a ranging slot duration within a new ranging block structure.

An updated ranging slot duration may indicate the duration (RSTU unit) of a ranging slot within a new ranging block structure.

FIG. 12(d) shows an example of a ranging round (RR) IE format.

A ranging block index field may indicate the index of a ranging block.

A hopping mode field may indicate whether a hopping mode is supported for a ranging block.

A round index field may indicate a ranging round index within a ranging block.

A transmission offset field may indicate the value (RSTU unit) of the transmission offset of a ranging round within a block. A transmission offset may have a value obtained by subtracting a packet duration from the maximum value of a slot duration as the maximum value.

For a current ranging round (i.e., a ranging round in a ranging block with a block index of i), a RR IE may be included in the RCM of a ranging block with a block index of i. In this case, a RR IE may correspond to information that an ERDEV supports synchronization for a block structure.

For the next ranging round (i.e., a ranging round in the next ranging block with a block index of i+1), when the last message of a current ranging round (i.e., a ranging block with a block index of i) is transmitted from a controller to controlee(s), a RR IE may be transmitted in a final message to indicate ranging round information for a ranging block with a block index of i+1.

When the last message in a current ranging round (i.e., a ranging block with a block index of i) is transmitted from a controlee, a controller may transmit a RR IE in the RCM of the next ranging block with a block index of i+1 to indicate ranging round information for a ranging block with a block index of i+2.

In this case, a RCM in a ranging block with a block index of i+1 may include two RR IEs. One RR IE may be applied to the ranging round of a ranging block with a block index of i+1, and the other RR IE may be applied to the ranging round of a ranging block with a block index of i+2.

FIG. 12(e) shows an example of a SP3 ranging request reports (SRRR) IE format.

A SRRR IE may be used to request the report of AOA and/or reply time and/or round-trip time measurement from a requestor to a provider.

Each of a requestor address size specifier field and a provider address size specifier field may have a value of 00, 01, 10 and 11 as in Table 1 described above, and may indicate that an address is not present or that a short address (16 bits) or an extended address (64 bits) is used.

A report of AOA (RAOA) field may indicate whether report on AOA is requested.

A report of reply time (RRT) field may indicate whether report on a reply time is requested.

A report of round-trip time (RRTT) field may indicate whether report on a round-trip time is requested.

A report of TOF (RTOF) field may indicate whether report on TOF is requested.

A requestor address field may be set as the address of a device transmitting a signal where AOA is measured or initiating ranging.

A provider address field may be set as the address of a device measuring AOA.

Ranging Block and Round Structure

FIG. 13 is a diagram for describing a ranging block structure and a ranging phase to which the present disclosure may be applied.

In FIG. 13(a), a ranging block is a time duration for performing ranging, and one ranging block may include N ranging rounds.

A ranging round corresponds to a sufficient time for ERDEVs participating in ranging exchange to complete a ranging measurement cycle, and one ranging round may include M ranging slots.

A ranging slot may correspond to a time sufficient for transmission of at least one RFRAME.

The number of slots included in a slot duration and a ranging round may be different between ranging rounds. To this end, a controller may transmit a RCM that changes a ranging round configuration to controlee(s).

A ranging control message (RCM) is the first message transmitted by a controller, and may be transmitted in the first slot of a ranging round. A RCM may include configuration information for a ranging parameter.

A ranging control update message (RCUM) corresponds to a message transmitted by a controller in the last slot of ranging round(s) designated by a RCM in order to update a ranging parameter for the next ranging round(s). IE(s) included in a RCM for updating a ranging parameter may be included in a RCUM.

A ranging interval update message (RIUM) corresponds to a message transmitted by a controller to update an interval between ranging blocks and help synchronization between participating ERDEVs. A RCUM may include the scheduled time of the first RIUM, and a RIUM may include the scheduled time of the next RIUM (if used) before the start of the next ranging block.

FIG. 13(b) describes phases in a ranging procedure.

A ranging control phase (RCP) corresponds to a phase where a controller transmits a RCM.

A ranging phase (RP) may include a ranging initiation phase (RIP), a ranging response phase (RRP) and a ranging final phase (RFP).

A RIP corresponds to a phase where an initiator transmits ranging initiation message(s) to responder(s).

A RRP corresponds to a phase where responder(s) transmits response message(s) to an initiator.

A RFP corresponds to a phase where an initiator transmits ranging final message(s) to a responder, and may be used only in DS-TWR.

A measurement report phase (MRP) corresponds to a phase where participating ERDEVs exchange service information related to ranging measurement.

A ranging control update phase (RCUP) corresponds to a phase where a controller transmits a RCUM, and when a RCUP exists, a corresponding phase may be located in the last slot of the set of ranging rounds designated by a RCM.

A ranging interval update phase (RIUP) corresponds to a phase where a controller transmits a RIUM.

FIG. 14 shows examples of a timing diagram for various multi-device ranging to which the present disclosure may be applied.

FIG. 14(a) corresponds to the example of OWR, FIG. 14(b) corresponds to the example of SS-TWR, FIG. 14(c) corresponds to the example of the combination of a RCP and a RIP in SS-TWR, FIG. 14(d) corresponds to the example of DS-TWR, FIG. 14(e) corresponds to the example of many-to-many SS-TWR and FIG. 14(b) corresponds to the example of many-to-many DS-TWR.

Hereinafter, a ranging mode is described.

In an interval-based mode, the average time of ranging rounds is variable, and a time structure may be applied with adaptive spacing.

In a block-based mode, the average time of ranging rounds is constant. In other words, a ranging block with the same duration may be repeated in a block-based mode.

Ranging mode selection may be determined based on a time structure indicator field within an ARC IE or an OOB mechanism.

FIG. 15 shows a timing diagram in an example of a block-based mode to which the present disclosure may be applied.

In a block-based mode, a ranging block structure may use a structured timeline. A ranging block structure setup may include designating a ranging block duration (RBD), a ranging round duration (RRD) and a ranging slot duration (RSD) based on the corresponding field of an ARC IE.

The number of ranging rounds corresponds to a value obtained by dividing a ranging block duration by a ranging round duration.

The number of ranging slots corresponds to a value obtained by dividing a ranging round duration by a ranging slot duration.

An ERDEV receiving a RCM may set an associated timeline for ranging based on the value of fields in an initial ranging block structure and an ARC IE. A ranging block structure may be set up and/or fixed by the next higher layer.

A ranging block structure may be transmitted repeatedly by a controller for each RCM (e.g., through an ARC IE). When the change or update of a ranging block structure (i.e., a new ranging block duration, ranging round duration and/or ranging slot duration) is required, a controller may transmit a RBU IE for a new configuration. A RBU IE may be transmitted through a final data frame in a ranging message sequence or a RCM. Whenever a RBU IE is transmitted, a controller may decrease a relative ranging block index one by one until it becomes 0. Accordingly, it may be indicated whether a new configuration will be used in the next block and whether the RCM ARC IE of the next block includes a new configuration.

Hereinafter, indexing is described.

For a ranging block, a block index is given as 0 for the first ranging block, and a relative block index is determined for the remaining blocks by using block index 0 as a reference.

For a ranging round, when N ranging rounds are included in one ranging block, a round index is given as 0 for the first ranging round in a current ranging block, and a relative round index (e.g., 1, ..., M-1) is determined for the remaining N-1 rounds by using round index 0 as a reference.

For a ranging slot, when M ranging slots are included in one ranging round, a slot index is given as 0 for the first ranging slot in a current ranging round, and a relative slot index (e.g., 1, ..., M-1) is determined for the remaining M-1 slots by using slot index 0 as a reference.

The new ranging message exchange may be transmitted/received as the first RCM in the ranging slot with index 0 of the ranging round with index 0 of a ranging block with index 0. In other words, a RCM packet may be transmitted at the start of the first ranging slot of the first ranging round. A RCM may include a RR IE to inform information associated with ranging rounds within a current ranging block.

FIG. 16 is a diagram for describing examples of various transmission offsets to which the present disclosure may be applied.

A RR IE included in a RCM may include transmission offset information as information associated with a ranging round within a current ranging block. In subsequent ranging rounds, a controller may start transmission in each slot based on a different transmission offset. A transmission offset may have a value obtained by subtracting an UWB packet duration from a ranging slot duration. A transmission offset may be expressed as a multiple of a RSTU.

A transmission offset may be applied to a ranging round. In other words, the same transmission offset may be applied to all packet transmissions included in the same ranging round. In the next higher layer of a controller, a transmission offset may be selected and communicated to all other devices through a RR IE. A controller may also change a transmission offset for each ranging round based on power that reduces interference.

One-to-many Ranging Procedure

FIG. 17 shows an example of a message sequence chart for one-to-many SS-TWR to which the present disclosure may be applied.

In a ranging procedure for one-to-many TWR, ranging exchange may be initiated by an initiator transmitting a RRMC IE, and a RRMC IE may be included in a ranging initiation message broadcast to multiple responders.

A RRMC IE where a ranging control information field is set as 0 (i.e., RRMC IE(0)) may be transmitted as a SS-TWR ranging initiation message. The reply time request field of a RRMC IE may be set as 1 to request a reply time from a responding ERDEV.

A RRMC IE delivered through a MCPS-DATA.indication primitive from each of the responder-1 to responder-N may give a signal to the next higher layer that must perform a ranging response. Each responder may insert a RequestRrtiTxList parameter into a RRTI IE (as a response to the reply time request of a RRMC IE) and transmit a RRMC IE where a ranging control information field is set as 1 (i.e., RRMC IE(1)) to an initiator. Here, responding RFRAMEs may be transmitted to an initiator in a unicast manner.

When an initiator receives each ranging response frame, an initiator may have sufficient information to calculate the TOF of a corresponding responder.

The final message broadcast by an initiator may include at least one RMI IE(s) for measurement report (when requested by a RRMC IE). A plurality of RMI IEs may be distinguished by a device associated by an address field. For example, responder-1 may set a TOF request field in a RRMC IE as 1, and responder-N may set a round-trip time request field in a RRMC IE as 1. When multiple responders request the same information set like TOF, measurement report from an initiator may be performed through one RMI IE within a final data message.

FIG. 18 shows an example of a message sequence chart for SP3 one-to-many SS-TWR to which the present disclosure may be applied.

At the start of a ranging round, a RCM may transmit ranging configuration information and an IE related thereto. A SRRR IE (I, R_1) may set RAOA and RRTT fields as 1 when responder-1 requests AOA and round-trip time from an initiator side.

Multi-node SP3 ranging may be based on scheduling designated by the next higher layer of a controller (i.e., each time slot is allocated to be used in a specific ERDEV).

A RDM IE in a RCM may include information that allocates time slots and device roles within a ranging round. An ARC IE may designate a ranging procedure and a SP3 packet format to make the next higher layer of an ERDEV to recognize the start and end of a SP3 ranging phase and invoke a MLME-STS primitive for enabling/disabling a SP3 packet before/after a ranging phase.

A RSKD IE for exchanging the parts of a STS seed for initializing STS generation between participating ERDEVs may be included in a RCM. According to the scheduling information of ranging transmission, the STS counter value of participating ERDEVs may be appropriately set for transmitting and receiving SP3 packets.

In a SP3 ranging phase, the next higher layer may appropriately set an operation on both sides by using MLME-STS.request to select a SP3 packet format and may set correct values for phyHrpUwbStsKey, phyHrpUwbStsVUpper96 and phyHrpUwbStsVCounter attributes. Since ranging scheduling is designated by a RCM preceding SP3 ranging, a device already knows a participant. Each time slot may be allocated to a specific (E)RDEV.

In a measurement report phase, an initiator may transmit AOA and round-trip time to responder-1 through a RMI IE. Responder-1 to responder-N may embed a requested reply time into a RMI IE sent to an initiator, respectively.

As another example, in the SP3 ranging phase of a message sequence for SP3 one-to-many DS-TWR, after receiving a SP3 frame as a ranging response message from each responder, an initiator may transmit a SP3 frame as a ranging completion message to each responder, through which the local value of an initiator's TxRangingCounter may be delivered to each responder. In a measurement report phase, an initiator may transmit a RMI IE including a reply time and a round-trip time to responders, and for this, each responder may transmit a RMI IE including AOA to an initiator.

Address indexing method based on address map

To provide scheduling information in an ultra-wideband (UWB) wireless network system, a scheduling information element (IE) is defined.

The scheduling IE may be intended to address the structural limitations of the ARC IE and the RDM IE.

In this regard, the scheduling IE provides a slot/block scheduling method for each device, similar to the RDM IE, and various scheduling types (e.g., six scheduling list types in Table 8 below) may be considered to optimize scheduling. For example, by distinguishing the scheduling list types, scheduling may be optimized not only through a slot-by-slot scheduling method, but also through slot-by-device scheduling in sequence or bitmap-based slot/block scheduling. Additionally, a periodic scheduling method and a Ranging Segment Fragment (RSF) scheduling method for NBA-MMS-UWB may be applied.

FIG. 19 illustrates a format of a scheduling information element (IE) to which the present disclosure may be applied.

Referring to FIG. 19, the existing scheduling IE format (e.g., the scheduling IE content field format) may include a scheduling list length field, a scheduling list type field, an address size field, a receiver address present field, and a variable-size scheduling list field.

Specifically, the scheduling list length field may indicate the number of elements in the scheduling list field.

The scheduling list type field may specify a format configuration method of the scheduling list field, and the scheduling list type field may indicate one of the values specified in Table 8.

[Table 8]

| Scheduling List Type field value | Type of Scheduling List field |
|---|---|
| 0 | Per-slot scheduling |
| 1 | Consecutive slot scheduling |
| 2 | Bitmap-based slot scheduling |
| 3 | Periodic scheduling |
| 4 | RSF scheduling |
| 5 | Bitmap-based block scheduling |
| 6-7 | Reserved |

Specifically, when per-slot scheduling is used, each scheduling list element may schedule one slot for a device.

When consecutive slot scheduling is used, each scheduling list element may schedule one slot for a device. Because scheduling list elements do not have a slot index field, slots may be scheduled in sequential order. For example, a slot subsequent to a slot in which a control message is transmitted may be scheduled for the device specified in the first scheduling list element. There may be no empty slots between scheduled slots.

When bitmap-based slot scheduling is used, multiple slots may be scheduled for a device using a single scheduling list element. That is, multiple slots may be scheduled for one device corresponding to one scheduling list element. The bitmap in each scheduling list element may represent a pattern of slots scheduled for a single device.

When periodic scheduling is used, multiple slots may be scheduled for a device using a single scheduling list element. That is, multiple slots may be scheduled for one device corresponding to one scheduling list element. The pattern of scheduled slots may be expressed by the number of scheduling repetitions and the size of the scheduling step.

When RSF scheduling is used, multiple slots may be scheduled for a device using a single scheduling list element. That is, multiple slots may be scheduled for one device corresponding to one scheduling list element. In a slot, devices shall transmit an RSF according to the scheduling list element, and the composition of the RSF may be determined by the scheduling list element.

When bitmap-based block scheduling is used, multiple slots may be scheduled for a device using a single scheduling list element. That is, multiple slots may be scheduled for a single device corresponding to a single scheduling list element. The bitmap in each scheduling list element may represent the pattern of blocks scheduled for a single device.

The address size field may specify the sizes of the sender address field and the receiver address field. For the sender address field and the receiver address field, if the address size is 0 (zero), a short address shall be used, and if the address size is 1, an extended address shall be used. Here, a short address may mean a 2-octet-based, i.e., 2-byte-based address, and an extended address may mean an 8-octet-based, i.e., 8-byte-based address.

The receiver address presence field may mean the presence of a receiver address field when set to 1, and the absence of a receiver address field when set to 0.

The format of the scheduling list field may be determined by the scheduling list type.

FIG. 20 illustrates a format of a scheduling list element according to the value of a scheduling list type field to which the present disclosure may be applied.

Referring to FIG. 20, FIG. 20(a) illustrates a format of scheduling list element(s) when the value of the scheduling list type field is 0. The format may include a slot index field and a sender address field.

FIG. 20(b) illustrates a format of scheduling list element(s) when the value of the scheduling list type field is 1. The format may include a sender address.

FIG. 20(c) illustrates a format of scheduling list element(s) when the value of the scheduling list type field is 2. The format may include a scheduling bitmap length field, a bitmap offset presence field, a scheduling bitmap field, a sender address field, a receiver address field, and a bitmap offset field.

Fig. 20(d) illustrates a format of scheduling list element(s) when the value of the scheduling list type field is 3. The format may include a start slot index field, a scheduling step field, a scheduling repetition field, a sender address field, and a receiver address field.

Fig. 20(e) illustrates a format of scheduling list element(s) when the value of the scheduling list type field is 4. The format may include a start slot index field, a scheduling step field, a scheduling repetition field, a sender address field, a receiver address field, a sequence index field, a gap count field, and a sequence repetition field.

FIG. 20(f) illustrates the format of scheduling list element(s) when the value of the scheduling list type field is 5. The format may include a block scheduling bitmap length field, a block scheduling bitmap field, a sender address field, and a sender address field.

Referring to the scheduling list element formats included in the aforementioned scheduling IE, the sender address field of each scheduling list element format may be allocated/set using a (2-byte based) short address or an (8-byte based) extended address.

In this regard, the present disclosure will hereinafter describe various examples of optimizing the size of the address field to 1 byte for a UWB message including an address field (e.g., scheduling list element formats according to all scheduling list types of the scheduling IE).

FIG. 21 is a diagram illustrating an operation of a first device according to the present disclosure.

In the example of FIG. 21, a first device may correspond to a controller, and a second device may correspond to a controlee.

In step S2110, the first device may transmit a control message including an information element (IE) related to discovery.

For example, the first device may transmit a control message including an AC IE in which an association availability field is set to a value of 1, for device discovery.

In step S2120, the first device may receive a first frame including an association request command from a second device, based on the control message.

For example, when the second device confirms that the association availability field included in the AC IE within the control message transmitted by the first device is set to a value of 1, the second device may transmit an association request command to the first device in order to request association with the first device.

Subsequently, in step S2130, the first device may transmit a second frame including an association response command to the second device in response to the association request command.

In this regard, the association response command may include address information for the second device. When address indexing based on a 1-octet address index is used, the address information may be designated as the 1-octet address index corresponding to the address of the second device.

For example, the address indexing may be based on address map information according to a mapping relationship between one or more addresses and one or more indices. Here, the address map information may be information generated and managed by the first device. In this regard, when session setup is completed through exchange of the first frame and the second frame, the 1-octet address index and the address for the second device may be updated or added to the address map information.

With respect to the above-described address indexing, regarding the address information included in the association response command, the 1-octet address index requested by the second device may be included in the association request command, or the 1-octet address index may be allocated by the first device according to the association request command.

In this regard, information for an association status included in the association response command may be determined based on one or more of: whether an error exists in the association request command, and whether an address indexing scheme based on a 1-octet address index (i.e., an address map-based address indexing scheme) is used.

For example, when no error exists in the association request command and the above-described address indexing scheme is used, the association status indicates success with address index, and the association response command may further include arbitration inter-frame spacing (AIFS) information to be used in the session. Additionally or alternatively, when no error exists in the association request command and the above-described address indexing scheme is not used, the association status indicates success, and the association response command may further include AIFS information to be used in the session. Additionally or alternatively, when an error exists in the association request command, the association status indicates rejection, and the association response command may further include information indicating an address indexing scheme to be applied to a network managed by the first device.

Additionally, when a specific device is deassociated, the 1-octet address index corresponding to the specific device may be released after a certain period of time. Here, the certain period of time may be based on the start and expiration of a preset timer. In this case, the preset timer may be a timer generated and managed by the first device.

The method described in the example of FIG. 21 may be performed by the first device 100 of FIG. 1. For example, one or more processors 102 of the first device 100 of FIG. 1 may be configured to transmit a control message including an information element related to discovery, receive a first frame including an association request command, and transmit a second frame including an association response command. Furthermore, one or more memories 104 of the first device 100 may store instructions for performing the method described in the example of FIG. 21 or in the examples described below, when executed by the one or more processors 102.

FIG. 22 is a diagram illustrating an operation of a second device according to the present disclosure.

In the example of FIG. 22, the first device may correspond to a controller, and the second device may correspond to a controlee.

In step S2210, the second device may receive a control message including an information element (IE) related to discovery.

For example, in relation to device discovery, the second device may receive a control message including an AC IE in which an association availability field is set to a value of 1.

In step S2220, the second device may transmit a first frame including an association request command to the first device, based on the control message.

For example, when the second device confirms that the association availability field included in the AC IE within the control message transmitted by the first device is set to a value of 1, the second device may transmit an association request command to the first device in order to request association with the first device.

Subsequently, in step S2230, the second device may receive, from the first device, a second frame including an association response command in response to the association request command.

In this regard, the association response command may include address information for the second device. When address indexing based on a 1-octet address index is used, the address information may be designated as the 1-octet address index corresponding to the address of the second device.

Detailed descriptions of the association request command, the association response command, the address indexing, and the address map information are the same as those described in the example of FIG. 21, and therefore redundant descriptions will be omitted.

The method described in the example of FIG. 22 may be performed by the second device 200 of FIG. 1. For example, one or more processors 202 of the second device 200 of FIG. 1 may be configured to receive a control message including an information element related to discovery, transmit a first frame including an association request command, and receive a second frame including an association response command. Furthermore, one or more memories 204 of the second device 200 may store instructions for performing the method described in the example of FIG. 22 or in the examples described below, when executed by the one or more processors 202.

The examples of FIG. 21 and FIG. 22 may correspond to a part of various examples of the present disclosure. Hereinafter, various examples of the present disclosure including the examples of FIG. 21 and FIG. 22 will be described in more detail.

In the embodiments described below, a representative example is given of a method in which an address map is generated/managed by a controller that generates/manages a personal area network (PAN), but the embodiments described below may be equally applied even when an address map is generated/managed by another device (e.g., a controlee, another controller, a device above the controller, etc.).

Embodiment 1

The present embodiment relates to a scheme for negotiating, managing, and applying address indexing based on an address map among devices.

For the address indexing proposed in the present disclosure, a controller may need to manage an address map for controlees of a personal area network (PAN) formed by the controller (implicitly). Here, the address map may include address information (e.g., a short address or an extended address) of controlees currently connected/associated with the controller, and information for indices that match or are mapped to the corresponding address information.

In this regard, during a phase in which a controlee that has not yet established a session setup with the controller performs discovery and association for session setup, it may be necessary for the address map managed by the controller to be updated for the controlee (i.e., a new controlee), thereby generating address index information and providing the information from the controller to the controlee. Additionally, a scheme may be applied in which the controlee designates a desired address index and requests the designated address index from the controller.

FIG. 23 is a diagram illustrating an address map update and address index assignment according to the present disclosure.

Referring to FIG. 23, controlee 1 and controlee 2 represent devices that are joined to (i.e., have completed session setup with) a PAN managed by the controller, and controlee 3 represents a device newly joining (i.e., to establish a session setup with) the PAN.

When a new controlee performs session setup, a procedure for updating the address map and allocating an address index to the controlee may be performed.

For example, since controlee 1 and controlee 2 are joined to the PAN managed by the controller, in the address map managed by the controller, index 0 and index 1 may be respectively assigned to the address of controlee 1 (e.g., AA:AA) and the address of controlee 2 (e.g., BB:BB).

In this case, in order to join the PAN, controlee 3 may discover the controller through a UWB discovery process, and session setup may be performed through an association process with the controller. During this process, the controller may assign an index (e.g., address index 2) to the address of controlee 3 (e.g., CC:CC) and update the address information of controlee 3 in the address map. Based on the information of the updated address map, at the time when the association with the controller is completed, information for the address index may be delivered to controlee 3, and it may be possible to use the address index in subsequent session-based operations.

Through the foregoing process, a conventional 2-byte-based short address field or 8-byte-based extended address field may be optimized into a 1-byte-based address index.

Hereinafter, a discovery and association process (based on UWB devices) for the above-described address indexing will be described with reference to specific examples

For example, in order to configure/indicate controlee(s) to discover and associate with the controller, the controller may set an association availability field of an Application Control Information Element (AC IE) within a control message to a value of 1. By transmitting the AC IE within the control message, the controller may inform other devices of its presence, thereby enabling the other device(s) to perform a discovery operation (i.e., discovery of the device).

When a controlee detects/confirms, in the control message, an AC IE in which the association availability field is set to a value of 1, it may be regarded that a discovery operation has been performed.

When the controlee discovers the controller through the AC IE, the controlee may transmit an association request command (e.g., an HRP UWB association request command) to the controller in unscheduled slot(s) within a round. In this regard, when the controller uses an extended address for the control message, the controlee may need to use the extended address for the association request command. Also, when the controller uses a short address for the control message, the controlee may generate a short address and use the short address for the association request command. Additionally or alternatively, the controlee may include its capability information in the association request command.

When the reception of the association request command is successful, the controller may schedule slot(s) in the next block for transmission of an association response command (e.g., an HRP UWB association response command).

In this regard, when the reception of the association request command is successful, the controller may acquire the address information used by the controlee and add or update the corresponding information in the address map managed by the controller for address indexing. After the address map is added or updated, the controller may add index information (i.e., an address index) to the association response command and transmit it to the controlee. For example, the association response command may include information for an association status and information for an address index.

Additionally or alternatively, as described above, not only a scheme in which the controller assigns an address index for the controlee but also a scheme in which the controlee assigns a desired address index and requests it from the controller when transmitting the association request command may be applied. In this regard, when the request is made by the controlee, the controller may be configured to update the address map (i.e., the address map table) managed by the controller with the address index requested by the controlee. In this case, when duplication of indices occurs, or depending on the controller's policy for address management, information regarding such duplication or policy may be included in the association response command and provided to the controlee as a response.

FIG. 24 is a diagram illustrating frame exchange for an association process according to the present disclosure.

Referring to FIG. 24, according to the procedure described above in the present disclosure, within unscheduled slots (e.g., contention slots) in a round, frames for an association request command and an association response command may be transmitted and received.

In this case, the association request command may be transmitted by the controlee to the controller, and the association response command may be transmitted by the controller to the controlee in response to the association request command.

For example, the association request/response commands (e.g., HRP UWB association request/response commands) for applying the address indexing proposed in the present disclosure may be as illustrated in FIG. 25.

FIG. 25 illustrates the format of an association request command and an association response command according to the present disclosure.

Referring to FIG. 25(a), an association request command format (e.g., an association request command content field format or an association request command packet format) may include a first field based on 4 octets for a session ID, a second field based on 2 octets for capability information, and a third field based on 0 or 1 octet for an address index requested by the controlee.

For example, with respect to the first field of the association request command format, the session ID may be a 4-octet-based session identifier uniquely assigned to each session for a controller.

With respect to the second field of the association request command format, the format for the capability information may include a field for indicating whether LDPC is supported (e.g., 1-bit information), a field for indicating whether high throughput is supported (e.g., 1-bit information), and a field for indicating supported Arbitration Interframe Space (AIFS) time (e.g., 2-bit information), among others.

With respect to the third field of the association request command format, the field may be used to designate an address index desired or assigned by the controlee requesting the association request command, if such an index exists. If no address index is requested by the controlee, the field may be omitted.

Referring to FIG. 25(b), an association response command format (e.g., an association response command content field format, an association response command packet format) may include a first field based on 1 octet for an association status, a second field based on 0 or 1 octet for session configuration, and a third field based on 0 or 1 octet for an address index.

For example, with respect to the first field of the association response command format, the association status may be designated or set as shown in Table 9.

[Table 9]

| Association status | Description |
|---|---|
| 0x00 | Association successful |
| 0x01 | Session at capacity |
| 0x02 | Short address duplication |
| 0x03 | Association denied by other reason |
| 0x04 | Association successful with address index |
| 0x05 | Address index duplication |
| 0x06 | Rejected with suggested address method |
| 0x07-0xff | Reserved |

With respect to Table 9, when the first field for the association status is designated or set to 0x00, 0x04, or 0x06, the association response format may include a second field for session configuration.

With respect to the second field of the association response command format, the format for the session configuration may include a field for Arbitration Interframe Space (AIFS) time (e.g., 2-bit information), a field for the address index method (e.g., 2-bit information), and the like.

In this regard, the field for the AIFS time may specify the AIFS time to be used in the session. This field may be required only when the value of the first field for the association status is 0x00 or 0x04, and may not be used when it is 0x06. The value for this field may be defined as shown in Table 10.

[Table 10]

| AIFS Field value | AIFS time |
|---|---|
| 0 | 64 us |
| 1 | 32 us |
| 2 | **16** us |
| 3 | Reserved |

Additionally, the field for the address index method may be used to indicate how the controller manages the address index requested by the controlee when the value of the first field for the association status is 0x06. This field may be required only when the value of the first field for the association status is 0x06, and may not be used when it is 0x00 or 0x04. For example, the value of the field for the address index method may be defined as shown in Table 11.

[Table 11]

| Address index scheme field value | Address scheme |
|---|---|
| 0 | Extended address |
| 1 | Short address |
| 2 | Address index by Controller |
| 3 | Reserved |

Referring to Table 11, in managing controlee(s) joined to the PAN, a value of 0 may indicate the use of an extended address, a value of 1 may indicate the use of a short address, and a value of 2 may indicate the use of an address index assigned or designated by the controller rather than requested by the controlee. In this regard, when the value of the first field for the association status is 0x06 and the controlee(s) receive address index information, the controlee(s) may need to perform the association request again according to the method indicated by the controller.

With respect to the address indexing scheme according to the present disclosure, the controller may manage an address map, and when the size of the address index is 1 byte, a total of 256 indices may be managed.

In this regard, once an address index is assigned, it may not be updated. If a device assigned to an address index is deassociated, only the address (i.e., the address information) may be deleted while the index is maintained, instead of deleting the address index. The index may be released after a certain period of time, and may be reassigned for use when another device requests association. In this case, the controller may define a timer for this scheme. For example, the timer may start upon deassociation of a specific device to release the corresponding index, and when the timer expires, the release of the index may be completed.

Embodiment 2

The present embodiment relates to an example of optimizing an address field included in a scheduling IE by using the address index described in Embodiment 1.

Information on the address index generated and delivered during the above-described discovery and association phases (i.e., session setup phases) may be applied as an index to the address field within a container, such as an IE transmitted and received in a UWB session.

For example, in order to apply the address map, the scheduling IE format (i.e., the scheduling IE content field format) may be modified or improved as shown in FIG. 26.

FIG. 26 illustrates an address indexing-based scheduling IE format according to the present disclosure.

Referring to FIG. 26, the scheduling IE format may additionally include an address index field/bit compared to the conventional scheduling IE format of FIG. 19.

The address index field may be defined to indicate whether address map-based address indexing is used.

For example, when the value of the address index field/bit is 0, it may indicate that address indexing using the address map is not used, and when the value is 1, it may indicate that address indexing using the address map is used. When the value of the address index field/bit is 1, the sender address in the scheduling list element included in the scheduling IE may be applied based on the sender address index rather than the conventional address format (e.g., 2-octet or 8-octet address).

FIG. 27 illustrates an address indexing-based scheduling list element format according to the present disclosure.

Referring to FIGS. 27(a) to 27(e), the scheduling list element format considering the address indexing of the present disclosure may include a 1-octet sender address index field compared to the conventional scheduling list element format of FIGS. 20(a) to 20(e). In this regard, when the scheduling list element format includes a sender address index field, the conventional sender address field may be omitted.

The address indexing method of the present disclosure may be applicable not only to the above-described scheduling IE but also to any IE that uses or includes an address field.

FIG. 28 is a diagram illustrating an address indexing-based scheduling IE format according to the present disclosure.

Referring to FIG. 28, an example will be described assuming that a scheduling IE corresponding to a per-slot scheduling type (i.e., scheduling list type 0) is transmitted and received in each round.

For example, when the address index field/bit in the scheduling IE format transmitted in each round is set to a value of 1, the address information of the scheduling list element may have a sender address index. That is, in this case, the address information in the scheduling list element may be configured based on address map-based address indexing.

As a specific example, a sender address index 0 may be assigned for slot 0, a sender address index 1 may be assigned for slot 1, and a sender address index 2 may be assigned for slot 2. In this case, based on the address map, the sender address in slot 0 corresponds to AA:AA, the sender address in slot 1 corresponds to BB:BB, and the sender address in slot 2 corresponds to CC:CC.

With respect to the address information, by referring to the address map managed by the controller while associating with the controlee(s) (i.e., the address map for each address indexing), it is possible to obtain the address of each controlee. In this case, since the controlee is aware of information on its own address index during the association process, the controlee may utilize the information to infer or confirm its scheduling information in the scheduling list element.

With respect to the sender address index, during the association process, address index information may be included in and transmitted with an association response command (e.g., an HRP UWB association response command). The controlee may utilize this to transmit including the sender address index. Through this, compared to transmitting a conventional sender address (e.g., a 2/8-byte-based address), the method proposed in the present disclosure may have the technical effect of optimizing the transmission and reception of address information to a size of 1 byte.

An RCM (or a frame including the above-described block allocation schedule information) including the HBS IE scheduling IE according to the present disclosure may have a narrowband PPDU format based on offset quadrature phase-shift keying (O-QPSK) PHY (e.g., a PPDU format including SHR, PHR, and PHY payload fields as in FIG. 2(g)). The SHR may include a preamble and SFD. The PHR may include a frame length field.

An RCM (or a frame including the above-described block allocation schedule information) including the scheduling IE according to the present disclosure may also have a UWB PPDU format (e.g., a format as illustrated in the examples of FIG. 3). Explanations of the positions and functions of SYNC, SFD, PHR, STS, and PHY payload have been described with reference to FIG. 3.

Additionally, the transmission and reception procedures between devices based on address indexing in the embodiments described above are illustrated with reference to FIGS. 29 and 30.

For example, in FIGs. 29 and 30, the transmitting device may correspond to a controller device, and the receiving device may correspond to a controlee device.

FIG. 29 illustrates an operation on the transmitting device side performing a method according to the present disclosure.

Some of the steps described in FIG. 29 (or the detailed sub-steps described below) may be omitted or modified.

In step S2910, the transmitting device may generate a control message (e.g., an RCM) including the AC IE described above in the present disclosure. For device discovery, the association availability field in the AC IE of the control message may be set to a value of 1. The control message may be converted into a PPDU to which a mandatory UWB channel and preamble code are applied and may be transmitted. After transmitting the control message, the transmitting device may wait to receive an association request message from the receiving device.

In step S2920, the transmitting device may receive an association request PPDU from the receiving device (i.e., a PPDU including an association request command as described in the present disclosure). When the transmitting device receives the association request, the transmitting device may check whether an address index has been requested by the receiving device. If an address index has been requested, the transmitting device may acquire the address of the receiving device and the address index (e.g., the address index assigned by the receiving device). Alternatively, if no address index has been requested, the transmitting device may acquire the address of the receiving device and assign or grant an address index for that address.

In step S2930, the transmitting device may generate an association response (i.e., an association response command as described in the present disclosure) for the association request of the receiving device. If it is determined that there is an error in the association request, the transmitting device may generate a reject response including the reason for the error and transmit the association response. Alternatively, if it is determined that there is no error in the association request, according to a policy or rule (i.e., the policy or rule of the controller), the transmitting device may generate a success response including an address index in the association response and transmit it to the receiving device when an address index is used, or may transmit the association response including a success response to the receiving device when an address index is not used

FIG. 30 illustrates an operation on the receiving device side performing a method according to the present disclosure.

Some of the steps described in FIG. 30 (or the detailed sub-steps described below) may be omitted or modified.

In step S3010, the receiving device may repeatedly perform scanning (e.g., a UWB scanning process) based on a mandatory UWB channel and preamble code combination for UWB discovery. If an AC IE in which the association availability field is set to a value of 1 is discovered during the scanning process, the receiving device may receive the AC IE.

In step S3020, the receiving device may transmit an association request (i.e., an association request command as described in the present disclosure) to the transmitting device based on the AC IE in which the association availability field is set to a value of 1. If the receiving device requests an address index it desires, the receiving device may include the corresponding address index in the association request and transmit it to the transmitting device. Alternatively, if the receiving device does not request an address index, the receiving device may generate only the association request and transmit it to the transmitting devic.

In step S3030, the receiving device may receive and process a response to the association request transmitted to the transmitting device. When the receiving device receives the association response from the transmitting device, it may check whether the response code indicates an error. If it is determined to be an error, the receiving device may retry the association request. Alternatively, if it is determined not to be an error, the receiving device may check whether an address index is included in the association response. If the address index is included, the receiving device may store the address index and complete the association. Alternatively, if the address index is not included, the receiving device may complete the association.

In conventional UWB wireless network systems, address information is based on a 2-byte short address or an 8-byte extended address. In contrast, the address indexing according to the examples of the present disclosure is based on an address map recognizable between the controller and the controlee, which may provide the technical effect of optimizing the transmission and reception of address information to a size of 1 byte.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

[Industrial Applicability]

A method proposed in the present disclosure is described based on an example applied to an IEEE 802.15.4-based system, but it may be applied to various UWB wireless network or wireless communication systems other than an IEEE 802.15.4-based system.

## Claims

**1.** A method performed by a first device in an ultra-wideband (UWB) wireless network system, the method comprising:

transmitting a control message including an information element (IE) related to discovery;
based on the control message, receiving a first frame including an association request command from a second device; and
in response to the association request command, transmitting a second frame including an association response command to the second device,
wherein the association response command includes address information for the second device, and
based on address indexing based on a 1-octet address index being used, the address information is designated as a 1-octet address index corresponding to the address of the second device.

**2.** The method of claim 1, wherein:
the address indexing is based on address map information according to a mapping relationship between one or more addresses and one or more indices.

**3.** The method of claim 2, wherein:
the address map information is generated and managed by the first device.

**4.** The method of claim 2, wherein:
based on completion of a session setup through exchange of the first frame and the second frame, 1-octet address index and an address for the second device are updated in the address map information

**5.** The method of claim 1, wherein:

for address information included in the association response command,
a 1-octet address index requested by the second device is included in the association request command, or a 1-octet address index is assigned by the first device according to the association request command.

**6.** The method of claim 5, wherein:
information for an association status included in the association response command is determined based on at least one of presence of an error for the association request command or whether an address indexing scheme based on a 1-octet address index is used.

**7.** The method of claim 6, wherein:

based on that no error exists in the association request command and the address indexing scheme is used, the association status indicates success with an address index, and the association response command further includes arbitration inter-frame spacing (AIFS) information to be used in a session.

**8.** The method of claim 6, wherein:

based on that no error exists in the association request command and the address indexing scheme is not used, the association status indicates success, and the association response command further includes arbitration inter-frame spacing (AIFS) information to be used in a session.

**9.** The method of claim 6, wherein:

based on that an error exists in the association request command,
the association status indicates rejection, and the association response command further includes information indicating an address indexing scheme applicable to a network managed by the first device.

**10.** The method of claim 1, wherein:

based on a specific device being deassociated, a 1-octet address index corresponding to the specific device is released after a predetermined time period, and
the predetermined time period is based on start and expiration of a preset timer.

**11.** The method of claim 1, wherein:

the first device corresponds to a controller, and
the second device corresponds to a controlee.

**12.** A first device apparatus in an ultra-wideband (UWB) wireless network system, the apparatus comprising:

one or more transceivers; and
one or more processors connected with the one or more transceivers,
wherein the one or more processors are configured to:

transmit a control message including an information element (IE) related to discovery;
based on the control message, receive a first frame including an association request command from a second device; and in response to the association request command, transmit a second frame including an association response command to the second device,
wherein the association response command includes address information for the second device, and based on address indexing based on a 1-octet address index being used, the address information is designated as a 1-octet address index corresponding to the address of the second device.

**13.** A method performed by a second device in an ultra-wideband (UWB) wireless network system, the method comprising:

receiving a control message including an information element (IE) related to discovery;
based on the control message, transmitting a first frame including an association request command to a first device; and
in response to the association request command, receiving a second frame including an association response command from the first device,

wherein the association response command includes address information for the second device, and
based on address indexing based on a 1-octet address index being used, the address information is designated as a 1-octet address index corresponding to the address of the second device.

**14.** A second device apparatus in an ultra-wideband (UWB) wireless network system, the apparatus comprising:

one or more transceivers; and
one or more processors connected with the one or more transceivers,
wherein the one or more processors are configured to:

receive a control message including an information element (IE) related to discovery;
based on the control message, transmit a first frame including an association request command to a first device; and
in response to the association request command, receive a second frame including an association response command from the first device,
wherein the association response command includes address information for the second device, and
based on address indexing based on a 1-octet address index being used, the address information is designated as a 1-octet address index corresponding to the address of the second device.

**15.** A processing device configured to control a user equipment in an ultra-wideband (UWB) wireless network system, the processing device comprising:

at least one processor; and
at least one computer memory operatively coupled to the at least one processor and storing instructions for performing a method according to any one of claims 1 to 11 upon being executed by the at least one processor.

**16.** At least one non-transitory computer readable medium storing at least one instruction, wherein:
the at least one instruction executed by at least one processor controls a device to performs a method according to any one of claims 1 to 11 in an ultra-wideband (UWB) wireless network system.

FIG.1

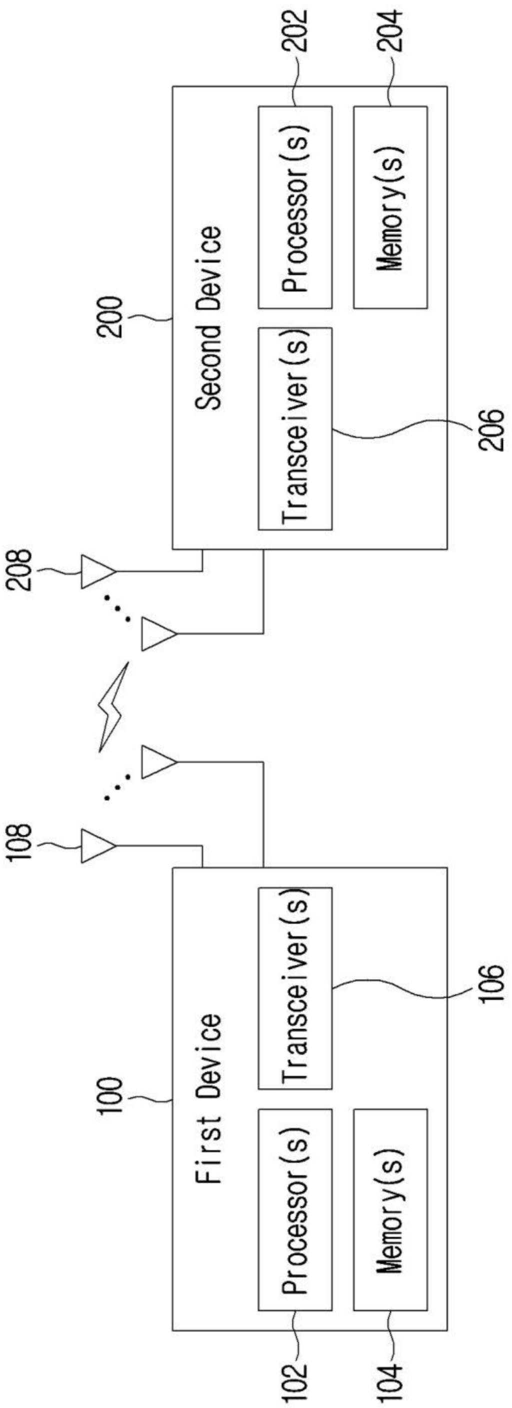
100
First Device
Processor(s)
Memory(s)
Transceiver(s)
102
104
106
108
200
Second Device
Transceiver(s)
Processor(s)
Memory(s)
202
204
206
208

FIG.2

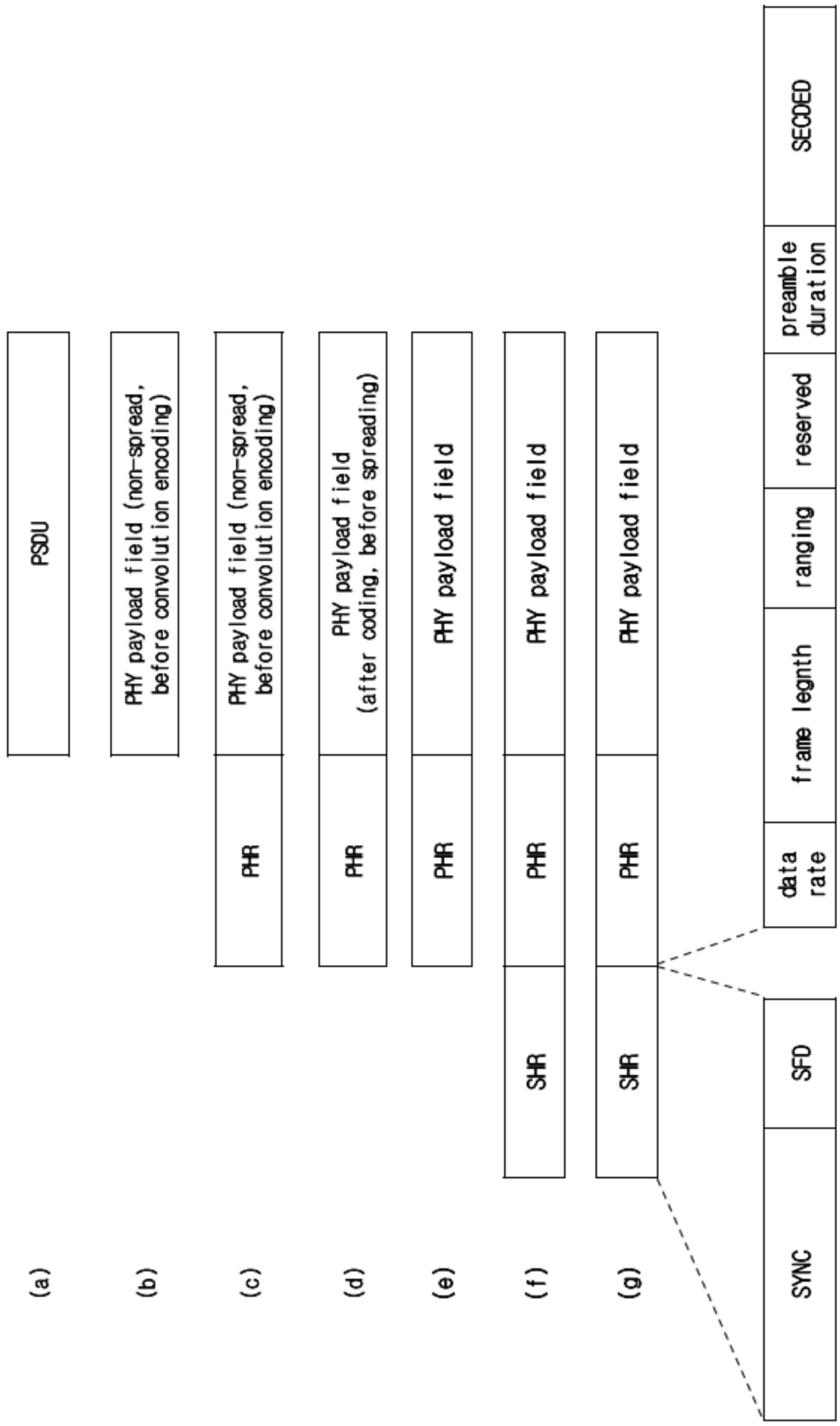
(a)
PSDU
(b)
PHY payload field (non-spread, before convolution encoding)
(c)
PHR
PHY payload field (non-spread, before convolution encoding)
(d)
PHR
PHY payload field (after coding, before spreading)
(e)
PHR
PHY payload field
(f)
SHR
PHR
PHY payload field
(g)
SHR
PHR
PHY payload field
SYNC
SFD
data rate
frame leghth
ranging
reserved
preamble duration
SECDED

FIG.3

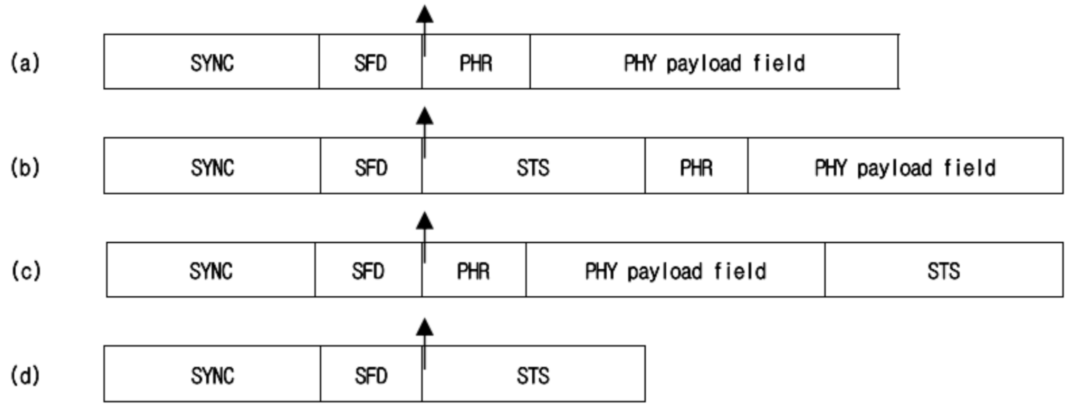
(a)
SYNC
SFD
PHR
PHY payload field
(b)
SYNC
SFD
STS
PHR
PHY payload field
(c)
SYNC
SFD
PHR
PHY payload field
STS
(d)
SYNC
SFD
STS

FIG.4

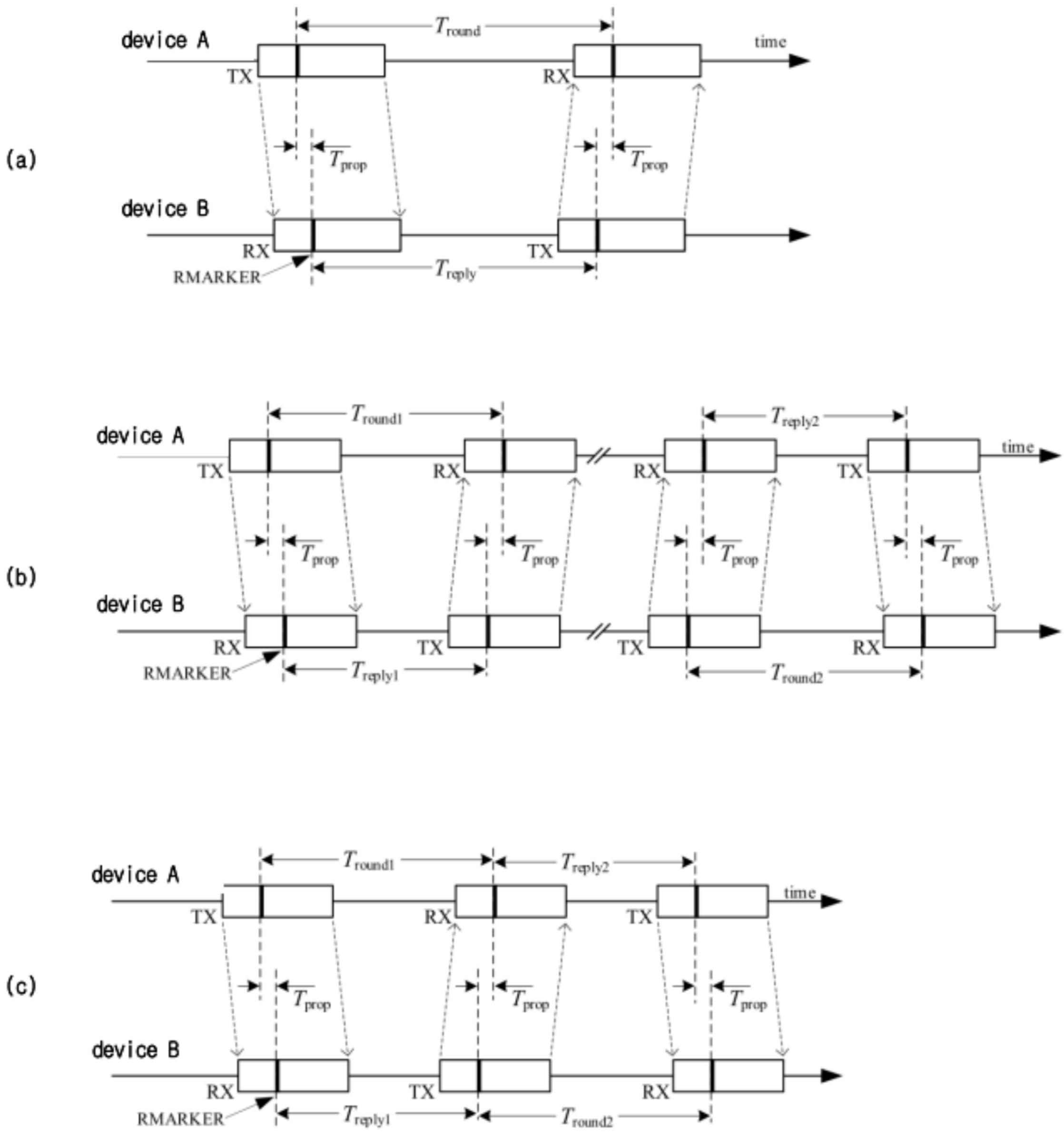
(a)
device A
device B
$T_{round}$
time
TX
RX
$T_{prop}$
$T_{prop}$
RX
TX
RMARKER
$T_{reply}$
(b)
device A
device B
$T_{round1}$
$T_{reply2}$
time
TX
RX
RX
TX
$T_{prop}$
$T_{prop}$
$T_{prop}$
$T_{prop}$
RX
TX
TX
RX
RMARKER
$T_{reply1}$
$T_{round2}$
(c)
device A
device B
$T_{round1}$
$T_{reply2}$
time
TX
RX
TX
$T_{prop}$
$T_{prop}$
$T_{prop}$
RX
TX
RX
RMARKER
$T_{reply1}$
$T_{round2}$

FIG.5

(a)

| bits: 0 | 1 | 2 | 3 | 4 | 5 | 6-7 | 8 | 9-15 | octets: variable |
|---|---|---|---|---|---|---|---|---|---|
| reply time present | round-trip time present | TOF present | AOA azimuth present | AOA elevation present | AOA FOM present | address size specifier | deferred mode | RMI list legnth | RMI list |

| octets: 0/4 | 0/4 | 0/4 | 0/2 | 0/1 | 0/2 | 0/1 | 0/2/8 |
|---|---|---|---|---|---|---|---|
| RX-to-TX reply time | TX-to-RX round-trip time | TOF | AOA azimuth | AOA azimuth FOM | AOA elevation | AOA elevation FOM | address |

(b)

| bits: 0 | 1 | 2 | 3-7 | octets: 0/4 | 0/3 | 0/1 | 0/1 | 0/2 |
|---|---|---|---|---|---|---|---|---|
| CCIP | DDP | PSP | channel number | CCI | DPS duration | TX preamble code | RX preamble code | PSR |

(c)

| bits: 0 | 1 | 2 | 3 | 4 | 5-6 | 7 | octets: 0/1 | variable |
|---|---|---|---|---|---|---|---|---|
| reply time request | round-trip time request | TOF request | AOA azimuth request | AOA elevation request | ranging control information | address size | RRMC address list legnth | RRMC Djemfpt list |

(d)

| bits: 0-1 | 2-7 | octets: variable |
|---|---|---|
| address size specifier | RRTI list legnth | RRTI list |

| octets: 4 | 0/2/8 |
|---|---|
| RX-to-TX reply time | address |

FIG.6

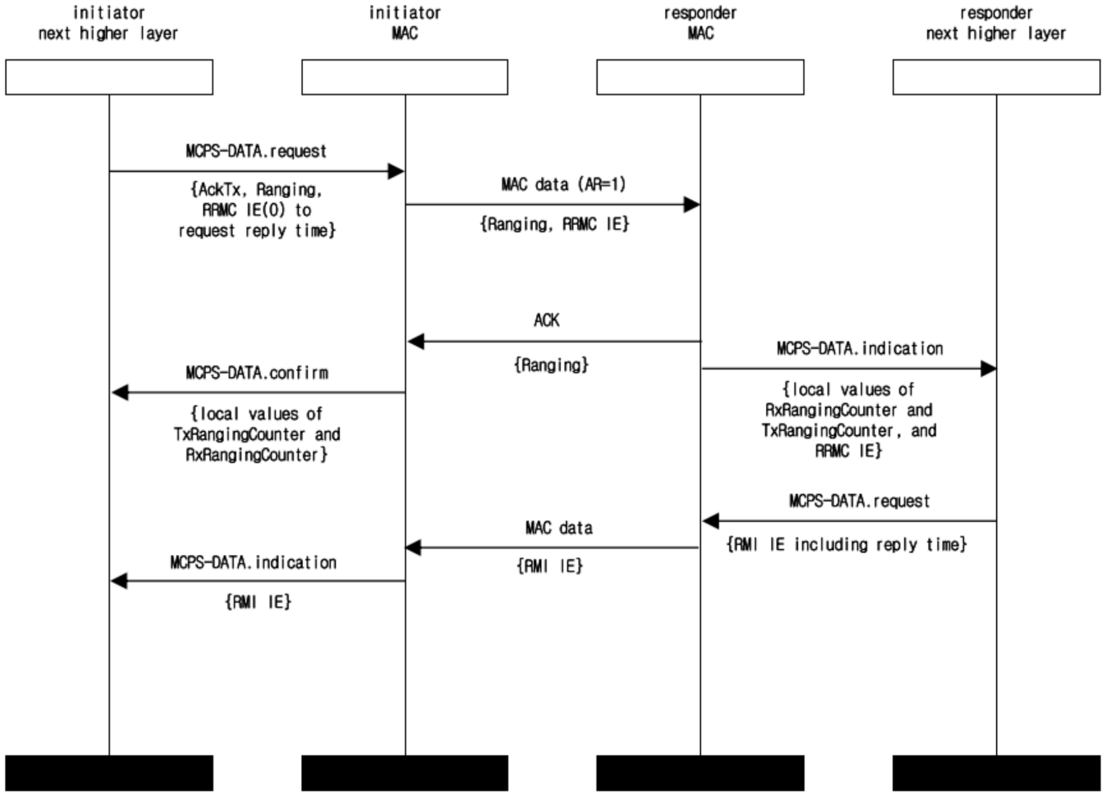
initiator
next higher layer
initiator
MAC
responder
MAC
responder
next higher layer
MCPS-DATA.request
{AckTx, Ranging,
RRMC IE(0) to
request reply time}
MAC data (AR=1)
{Ranging, RRMC IE}
ACK
{Ranging}
MCPS-DATA.indication
{local values of
RxRangingCounter and
TxRangingCounter, and
RRMC IE}
MCPS-DATA.confirm
{local values of
TxRangingCounter and
RxRangingCounter}
MCPS-DATA.request
{RMI IE including reply time}
MAC data
{RMI IE}
MCPS-DATA.indication
{RMI IE}

FIG.7

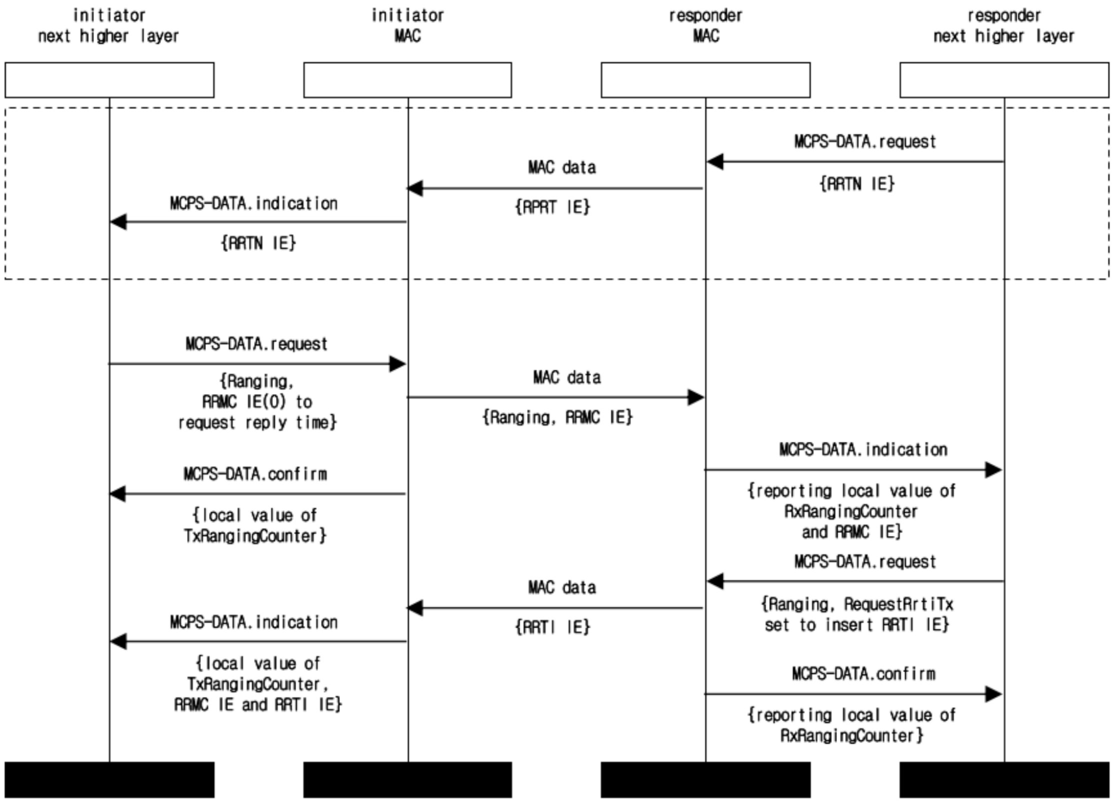
initiator
next higher layer
initiator
MAC
responder
MAC
responder
next higher layer
MCPS-DATA.request
{RRTN IE}
MAC data
{RPRT IE}
MCPS-DATA.indication
{RRTN IE}
MCPS-DATA.request
{Ranging,
RRMC IE(0) to
request reply time}
MAC data
{Ranging, RRMC IE}
MCPS-DATA.indication
{reporting local value of
RxRangingCounter
and RRMC IE}
MCPS-DATA.confirm
{local value of
TxRangingCounter}
MCPS-DATA.request
{Ranging, RequestRrtiTx
set to insert RRTI IE}
MAC data
{RRTI IE}
MCPS-DATA.indication
{local value of
TxRangingCounter,
RRMC IE and RRTI IE}
MCPS-DATA.confirm
{reporting local value of
RxRangingCounter}

FIG.8

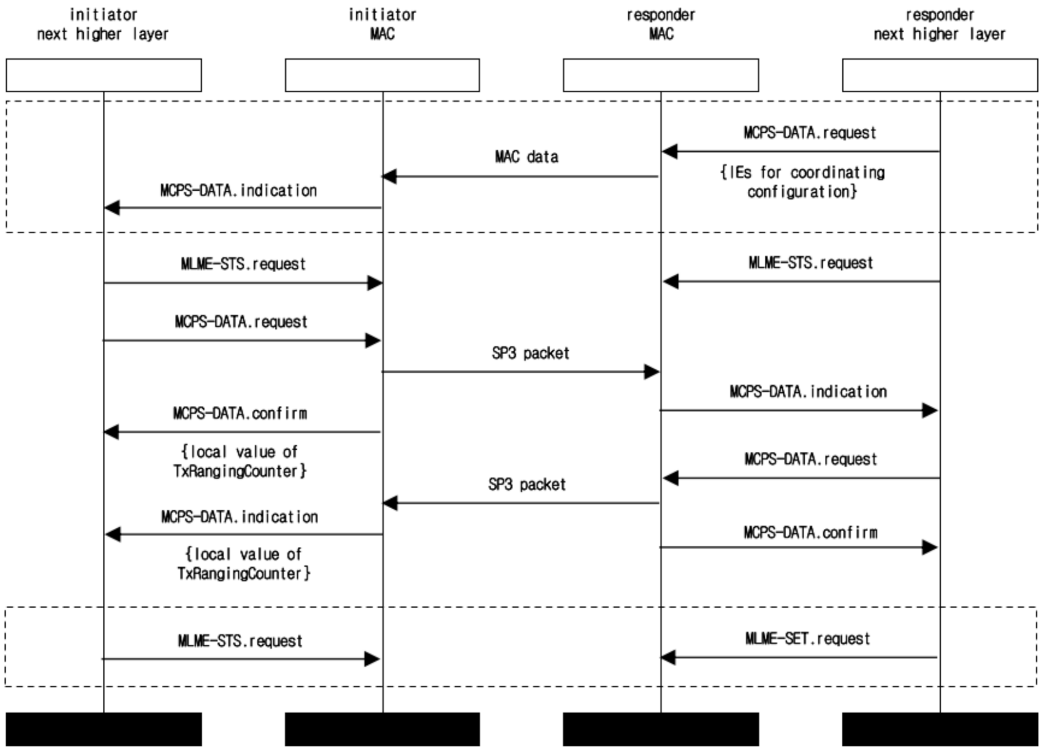
initiator
next higher layer
initiator
MAC
responder
MAC
responder
next higher layer
MCPS-DATA.request
MAC data
{IEs for coordinating configuration}
MCPS-DATA.indication
MLME-STS.request
MLME-STS.request
MCPS-DATA.request
SP3 packet
MCPS-DATA.indication
MCPS-DATA.confirm
{local value of TxRangingCounter}
MCPS-DATA.request
SP3 packet
MCPS-DATA.indication
MCPS-DATA.confirm
{local value of TxRangingCounter}
MLME-STS.request
MLME-SET.request

FIG.9

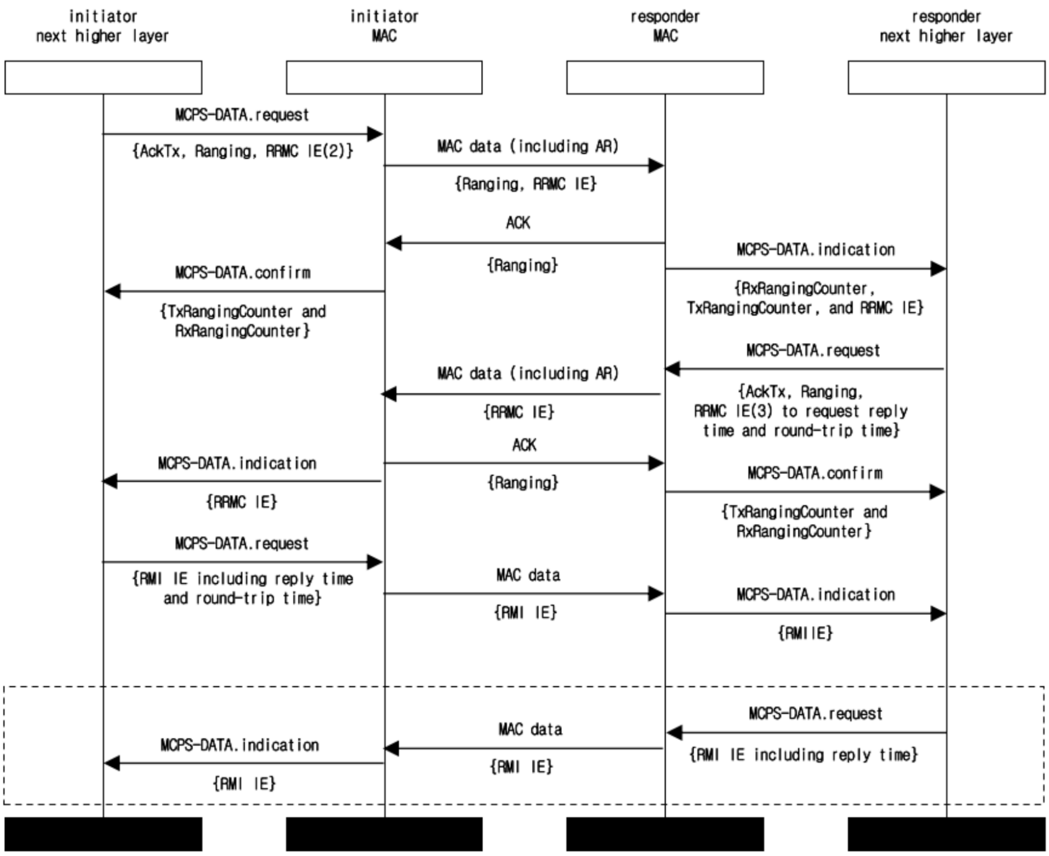
initiator
next higher layer
initiator
MAC
responder
MAC
responder
next higher layer
MCPS-DATA.request
{AckTx, Ranging, RRMC IE(2)}
MAC data (including AR)
{Ranging, RRMC IE}
ACK
{Ranging}
MCPS-DATA.indication
MCPS-DATA.confirm
{RxRangingCounter, TxRangingCounter, and RRMC IE}
{TxRangingCounter and RxRangingCounter}
MCPS-DATA.request
MAC data (including AR)
{RRMC IE}
{AckTx, Ranging, RRMC IE(3) to request reply time and round-trip time}
ACK
MCPS-DATA.indication
{Ranging}
MCPS-DATA.confirm
{RRMC IE}
{TxRangingCounter and RxRangingCounter}
MCPS-DATA.request
{RMI IE including reply time and round-trip time}
MAC data
{RMI IE}
MCPS-DATA.indication
{RMI IE}
MCPS-DATA.request
MAC data
{RMI IE including reply time}
MCPS-DATA.indication
{RMI IE}
{RMI IE}

24797414.0 20.11.2025

FIG.10

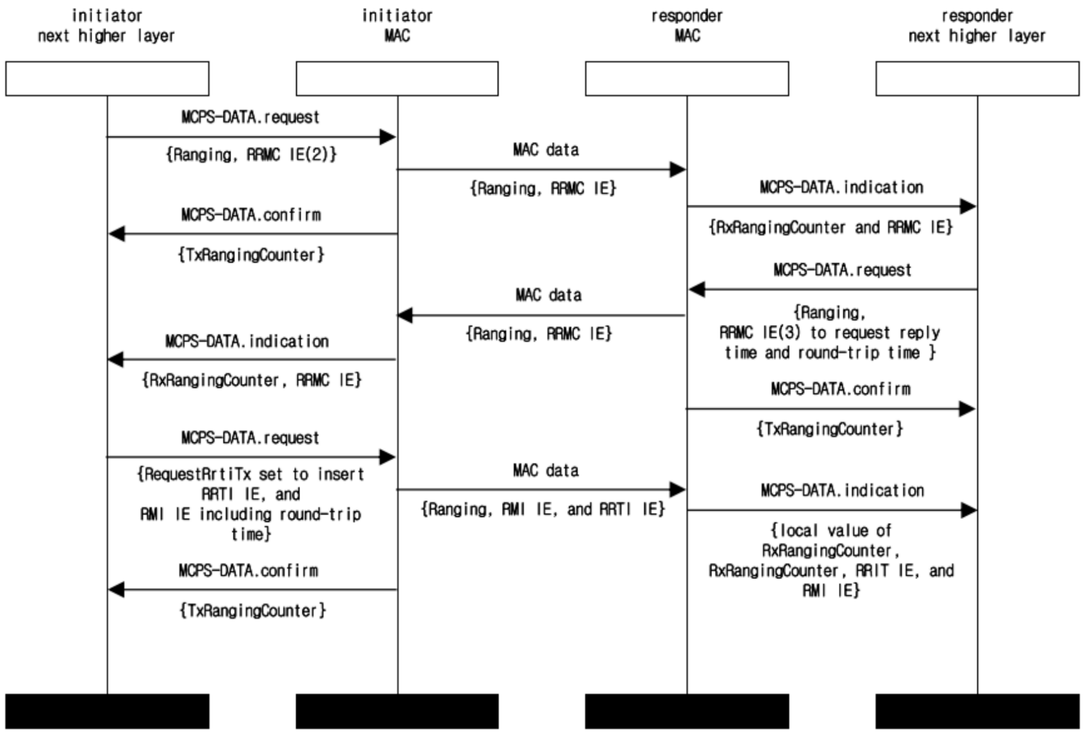

FIG.11

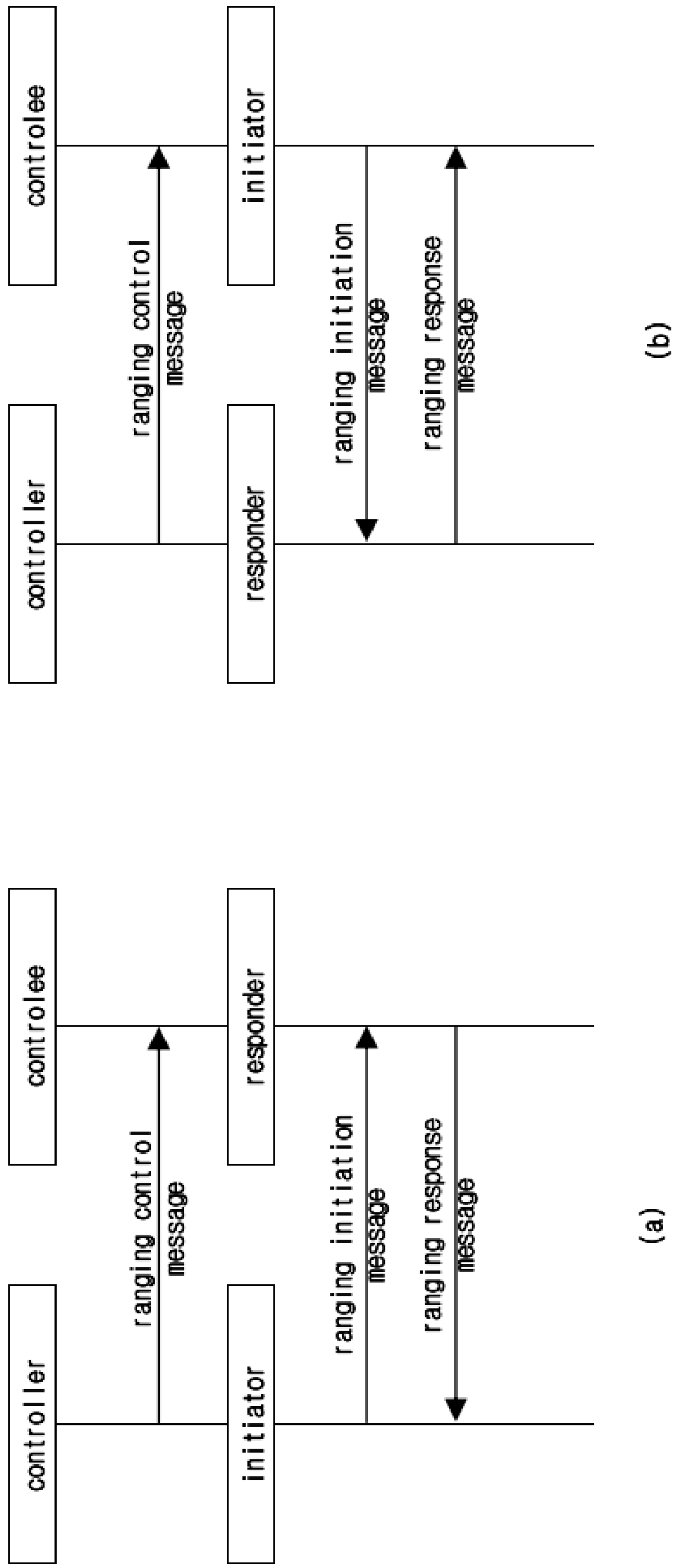

controller
controlee
initiator
responder
ranging control message
ranging initiation message
ranging response message
(a)
controller
controlee
responder
initiator
ranging control message
ranging initiation message
ranging response message
(b)

FIG.12

(a)

| bits: 0-1 | 2-3 | 4-5 | 6 | 7 | 8 | 9-14 | 15 | octets: 1 | 0/3 | 0/1 | 0/2 | 0/4 |
|---|---|---|---|---|---|---|---|---|---|---|---|---|
| multi-node mode | ranging round usage | STS packet config | schedule mode | deferred mode | time structure indicator | RCM validity round | MMRCR | content control | RBD | RRD | RSD | SID |

(b)

| bits: 0 | 1 | 2-7 | octets: variable |
|---|---|---|---|
| SIU | address size | RDM list legnth | RDM list |

| bits: 0 | 1-7 | octets: 2/8 |
|---|---|---|
| ranging role | ranging slot index | address |

(c)

| octets: 1 | 3 | 1/0 | 2/0 |
|---|---|---|---|
| relative ranging block index | update block duration | update ranging round duration | update slot duration |

(d)

| octets: 2 | bits: 0 | 1-15 | octets: 2 |
|---|---|---|---|
| ranging block index | hopping mode | round index | transmission offset |

(e)

| bits: 0-1 | 2-3 | 4 | 5 | 6 | 7 | octets: 0/2/8 | 0/2/8 |
|---|---|---|---|---|---|---|---|
| requestor address size specifier | provider address size specifier | RAOA | RRT | RRTT | RTOF | requestor address | provider address |

FIG.13

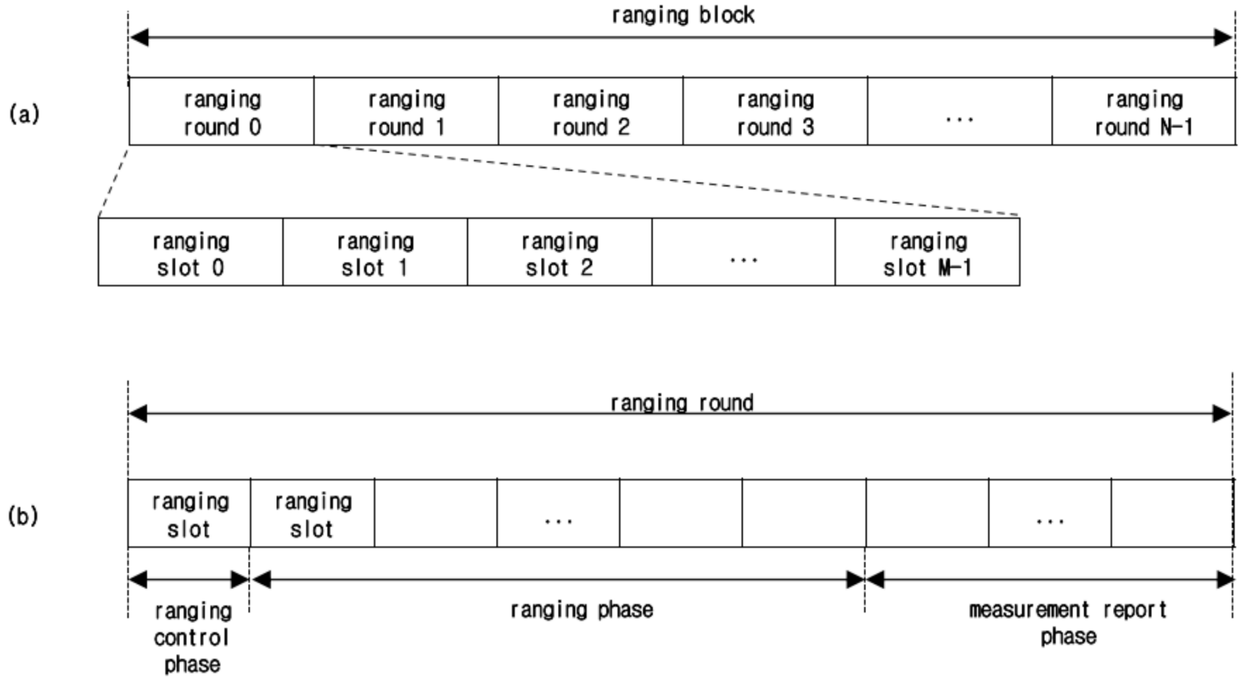
ranging block
(a)
ranging round 0
ranging round 1
ranging round 2
ranging round 3
...
ranging round N-1
ranging slot 0
ranging slot 1
ranging slot 2
...
ranging slot M-1
ranging round
(b)
ranging slot
ranging slot
...
...
ranging control phase
ranging phase
measurement report phase

FIG.14

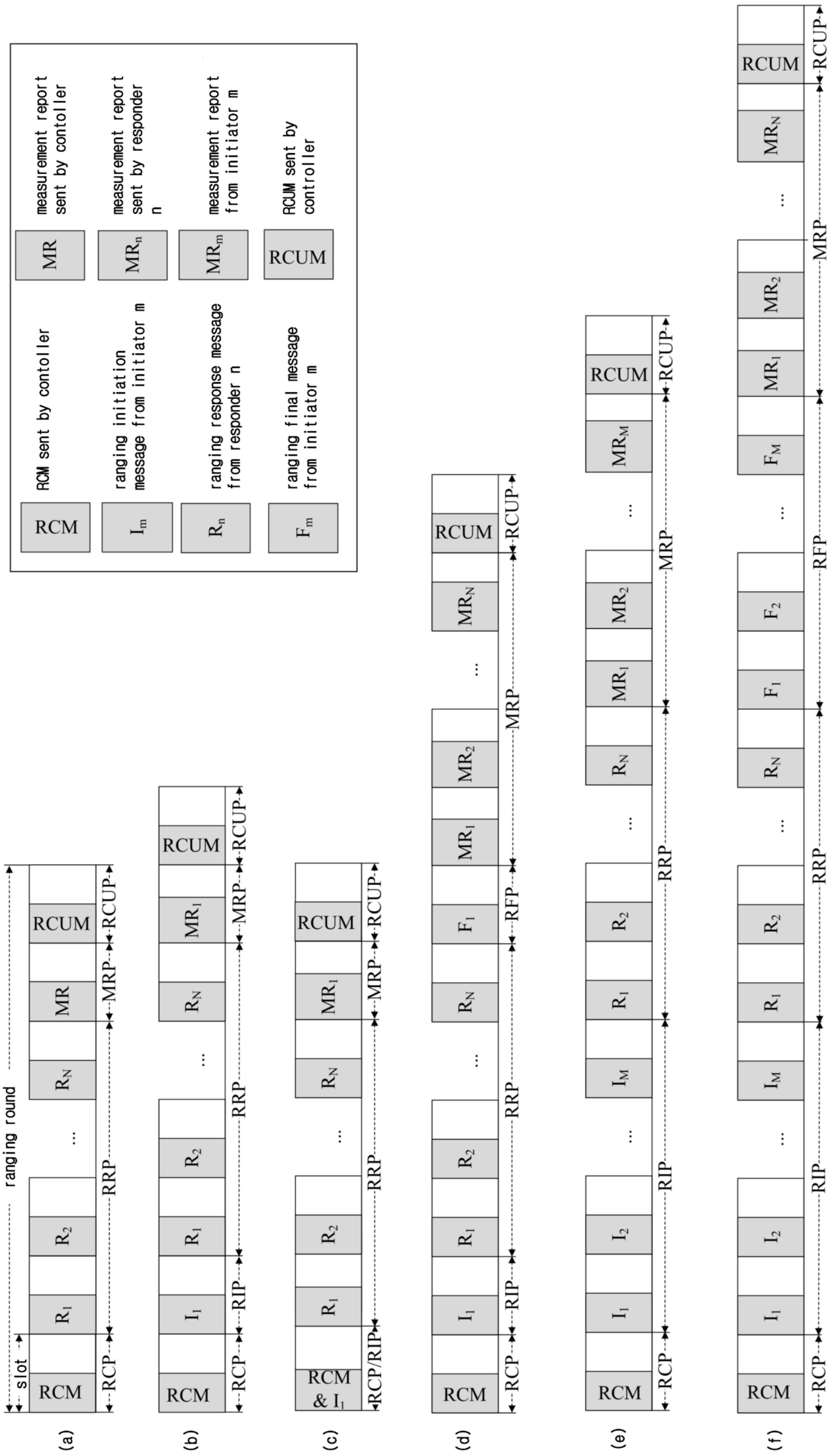
RCM
RCM sent by contoller
$I_m$
ranging initiation message from initiator m
$R_n$
ranging response message from responder n
$F_m$
ranging final message from initiator m
MR
measurement report sent by contoller
$MR_n$
measurement report sent by responder n
$MR_m$
measurement report from initiator m
RCUM
RCUM sent by controller
ranging round
slot
(a)
(b)
(c)
(d)
(e)
(f)
RCM & $I_1$
RCP
RIP
RRP
RFP
MRP
RCUP
RCP/RIP

FIG.15

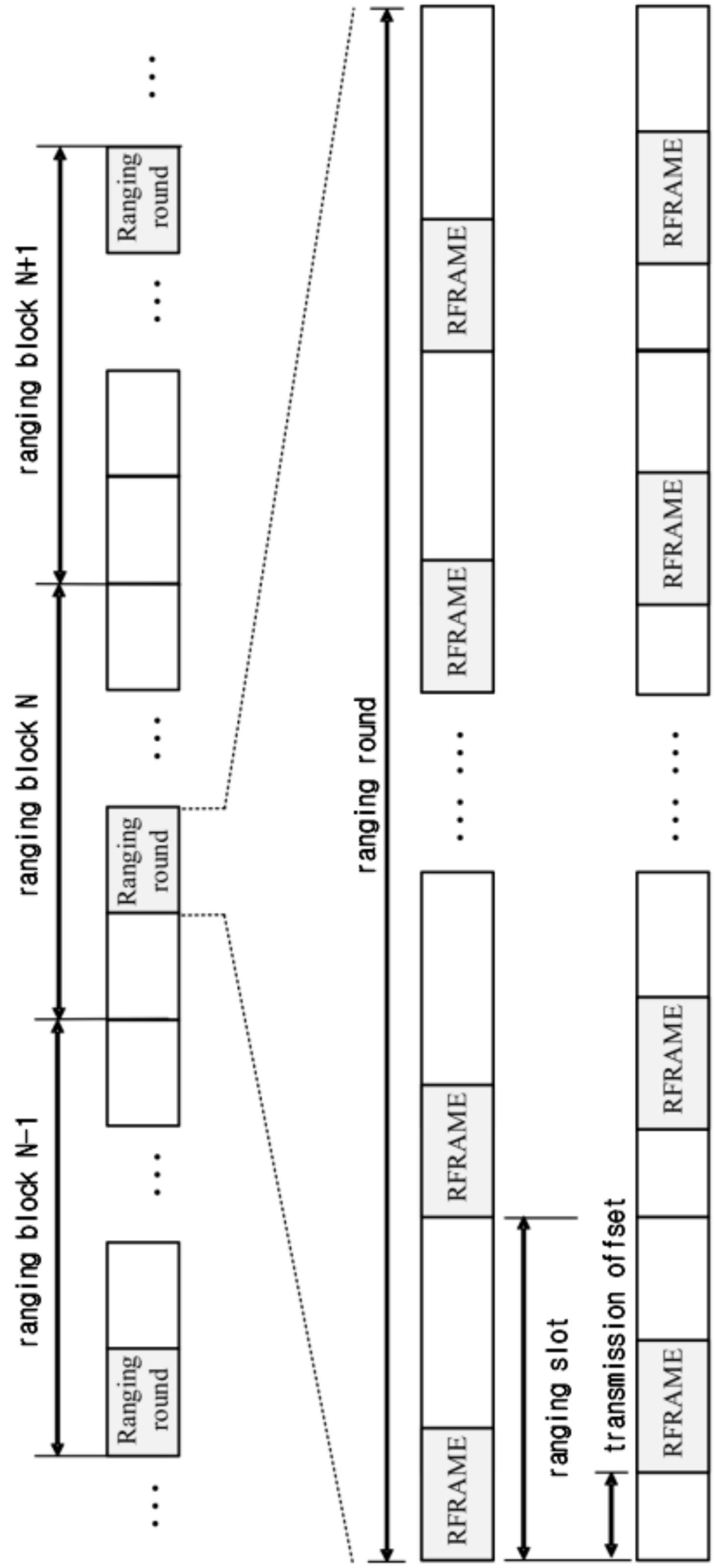
ranging block N-1
ranging block N
ranging block N+1
Ranging round
Ranging round
Ranging round
ranging round
RFRAME
ranging slot
transmission offset

FIG.16

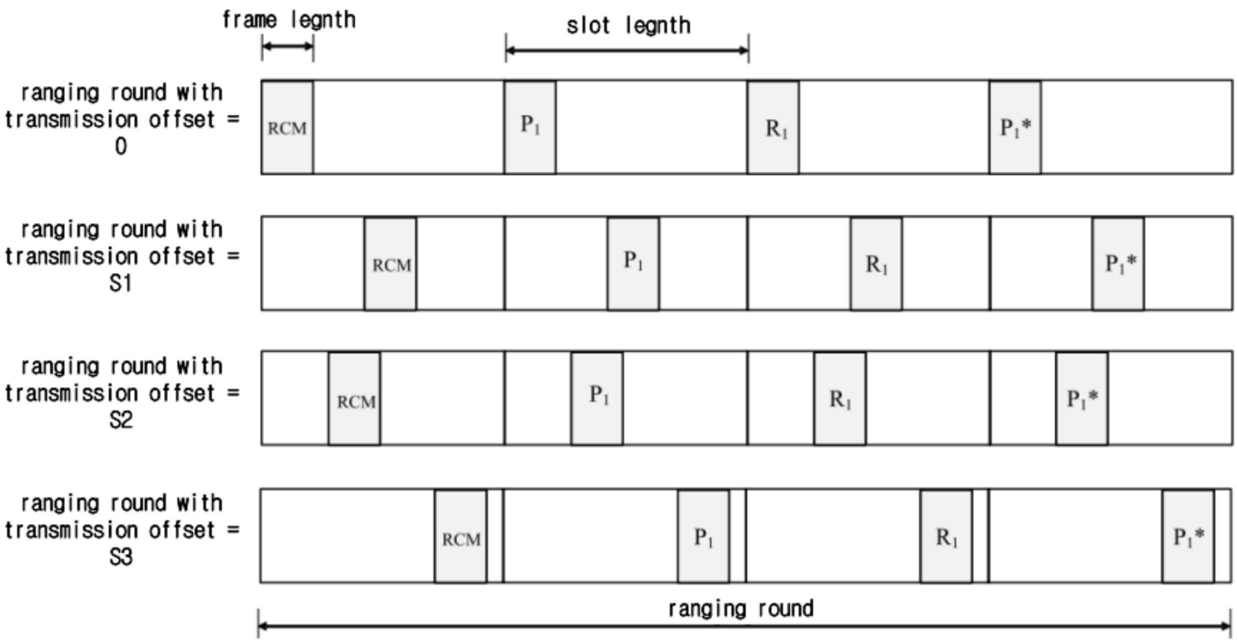
frame legnth
slot legnth
ranging round with transmission offset = 0
RCM
P1
R1
P1*
ranging round with transmission offset = S1
RCM
P1
R1
P1*
ranging round with transmission offset = S2
RCM
P1
R1
P1*
ranging round with transmission offset = S3
RCM
P1
R1
P1*
ranging round

FIG.17

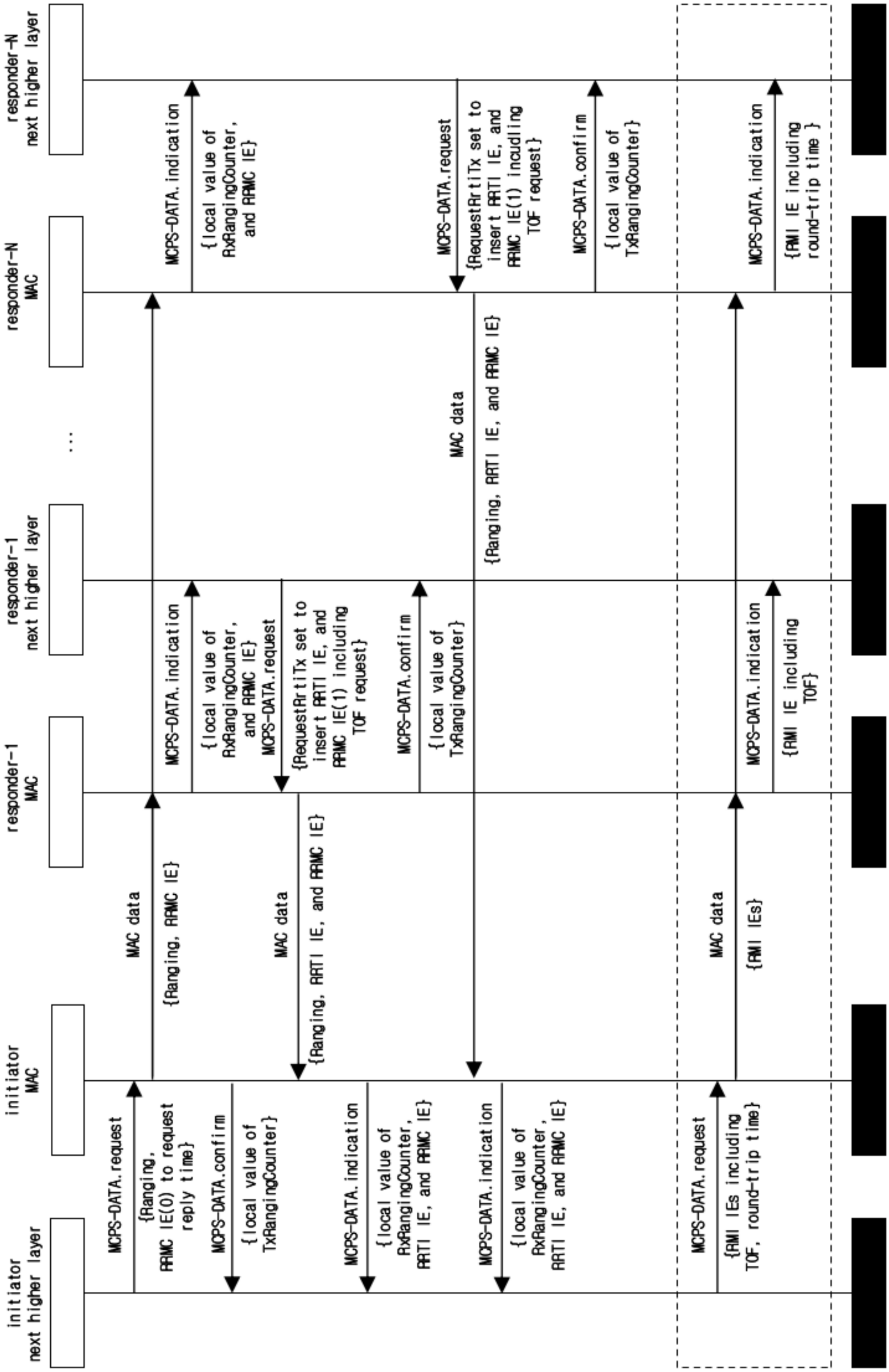
initiator next higher layer
initiator MAC
responder-1 MAC
responder-1 next higher layer
...
responder-N MAC
responder-N next higher layer
MCPS-DATA.request
{Ranging, RRMC IE(0) to request reply time}
MCPS-DATA.confirm
{local value of TxRangingCounter}
MAC data
{Ranging, RRMC IE}
MCPS-DATA.indication
{local value of RxRangingCounter, and RRMC IE}
MCPS-DATA.request
{RequestRrtiTx set to insert RRTI IE, and RRMC IE(1) including TOF request}
MAC data
{Ranging, RRTI IE, and RRMC IE}
MCPS-DATA.confirm
{local value of TxRangingCounter}
MCPS-DATA.indication
{local value of RxRangingCounter, RRTI IE, and RRMC IE}
MCPS-DATA.indication
{local value of RxRangingCounter, and RRMC IE}
MCPS-DATA.request
{RequestRrtiTx set to insert RRTI IE, and RRMC IE(1) incudling TOF request}
MAC data
{Ranging, RRTI IE, and RRMC IE}
MCPS-DATA.confirm
{local value of TxRangingCounter}
MCPS-DATA.indication
{local value of RxRangingCounter, RRTI IE, and RRMC IE}
MCPS-DATA.request
{RMI IEs including TOF, round-trip time}
MAC data
{RMI IEs}
MCPS-DATA.indication
{RMI IE including TOF}
MCPS-DATA.indication
{RMI IE including round-trip time }

FIG.18

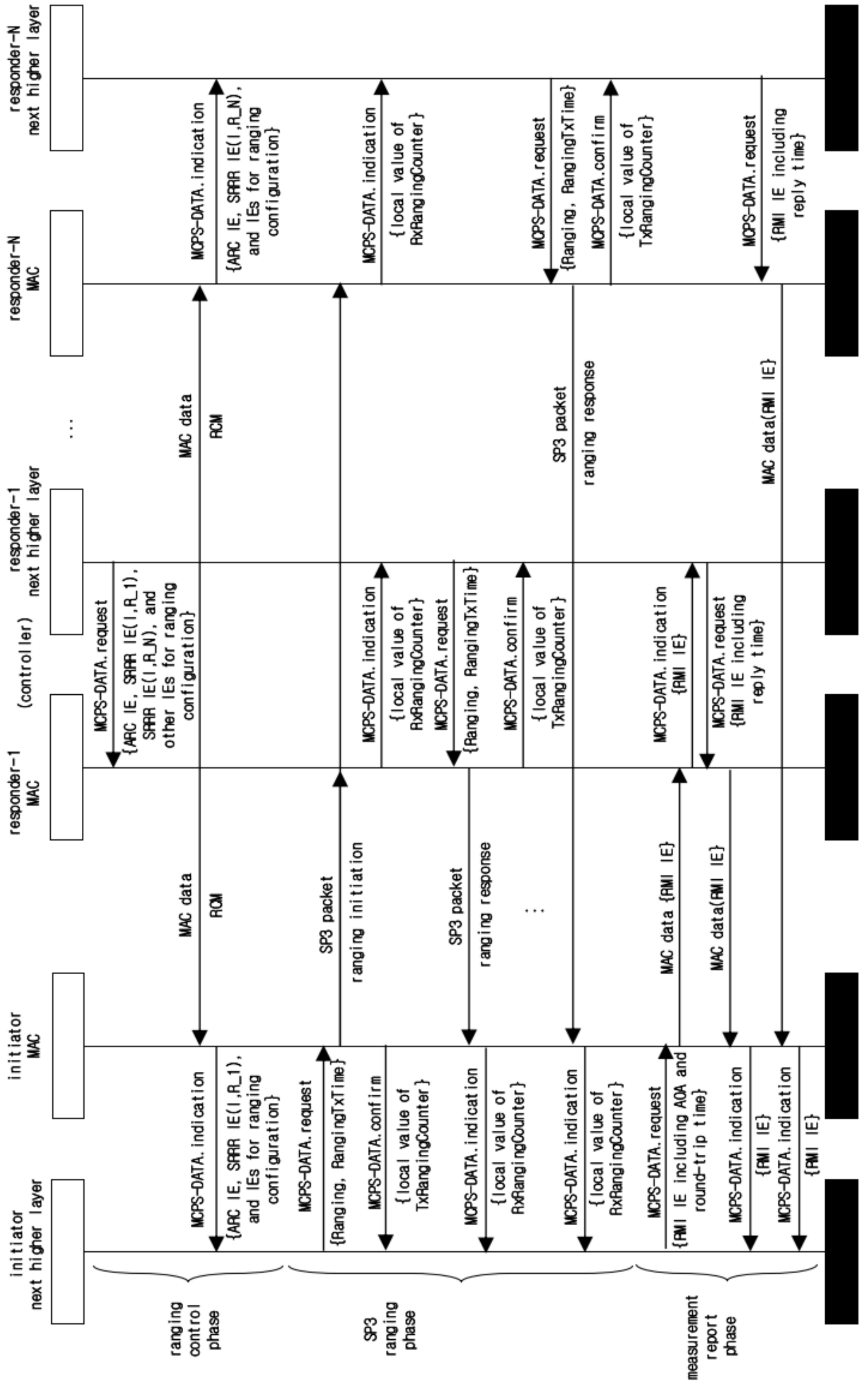

initiator next higher layer
initiator MAC
responder-1 MAC
(controller)
responder-1 next higher layer
...
responder-N MAC
responder-N next higher layer
ranging control phase
SP3 ranging phase
measurement report phase
MCPS-DATA.request
{ARC IE, SRRR IE(I,R_1), SRRR IE(I,R_N), and other IEs for ranging configuration}
MAC data
RCM
MCPS-DATA.indication
{ARC IE, SRRR IE(I,R_1), and IEs for ranging configuration}
{ARC IE, SRRR IE(I,R_N), and IEs for ranging configuration}
MCPS-DATA.request
{Ranging, RangingTxTime}
SP3 packet
ranging initiation
MCPS-DATA.confirm
{local value of TxRangingCounter}
MCPS-DATA.indication
{local value of RxRangingCounter}
MCPS-DATA.request
{Ranging, RangingTxTime}
SP3 packet
ranging response
MCPS-DATA.confirm
{local value of TxRangingCounter}
MCPS-DATA.indication
{local value of RxRangingCounter}
...
MCPS-DATA.request
{RMI IE including AOA and round-trip time}
MAC data {RMI IE}
MCPS-DATA.indication
{RMI IE}
MCPS-DATA.request
{RMI IE including reply time}
MAC data(RMI IE)
MCPS-DATA.indication
{RMI IE}
MCPS-DATA.indication
{RMI IE}

FIG.19

| Bits : 0–3 | 4–6 | 7 | 8 | 9–15 | Octets: variable |
|---|---|---|---|---|---|
| Scheduling list length | Scheduling list type | Address size | Presence of Receiver address | Reserved | Scheduling list |

FIG.20

(a)

| Octets: 1 | 2/8 |
|---|---|
| Slot index | Sender address |

(b)

| Octets: 2/8 |
|---|
| Sender address |

(c)

| Bits: 0–1 | 2 | 3–7 | Octets: variable | 2/8 | 0/2/8 | 0/1 |
|---|---|---|---|---|---|---|
| Scheduling Bitmap length | Presence of Bitmap Offset | Reserved | Scheduling Bitmap | Sender address | Receiver address | Bitmap Offset |

(d)

| Bits: 0–6 | 7–10 | 11–15 | Octets: 2/8 | 0/2/8 |
|---|---|---|---|---|
| Start slot offset | Scheduling step | Scheduling repetition | Sender address | Receiver address |

(e)

| Bits: 0–6 | 7–10 | 11–15 | Octets: 2/8 | 0/2/8 | 1 | 1 | 1 |
|---|---|---|---|---|---|---|---|
| Start slot offset | Scheduling step | Scheduling repetition | Sender address | Receiver address | Sequence index | Number of Gaps | Sequence repetition |

(f)

| Bits: 0–1 | 2-7 | Octets: variable | 2/8 |
|---|---|---|---|
| Block Scheduling Bitmap length | Reserved | Block Scheduling Bitmap | Sender address |

FIG.21

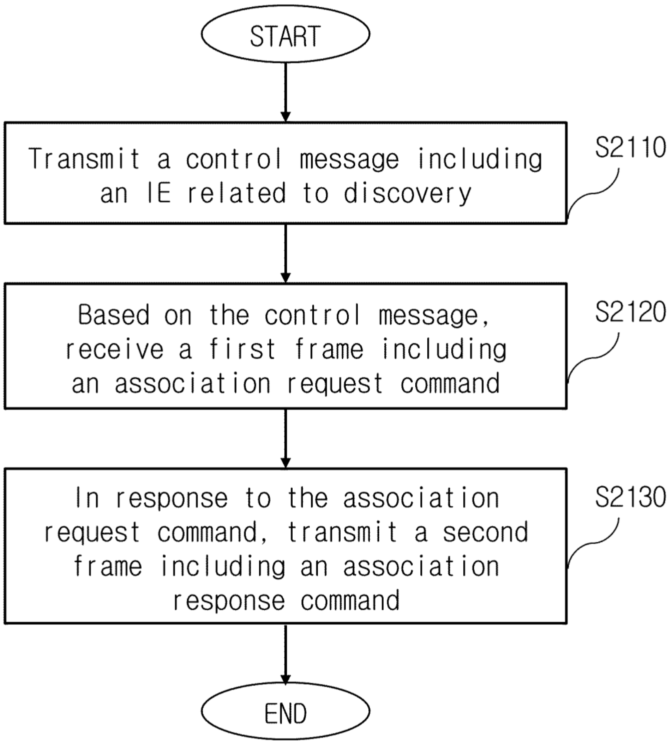
START
Transmit a control message including an IE related to discovery
S2110
Based on the control message, receive a first frame including an association request command
S2120
In response to the association request command, transmit a second frame including an association response command
S2130
END

FIG.22

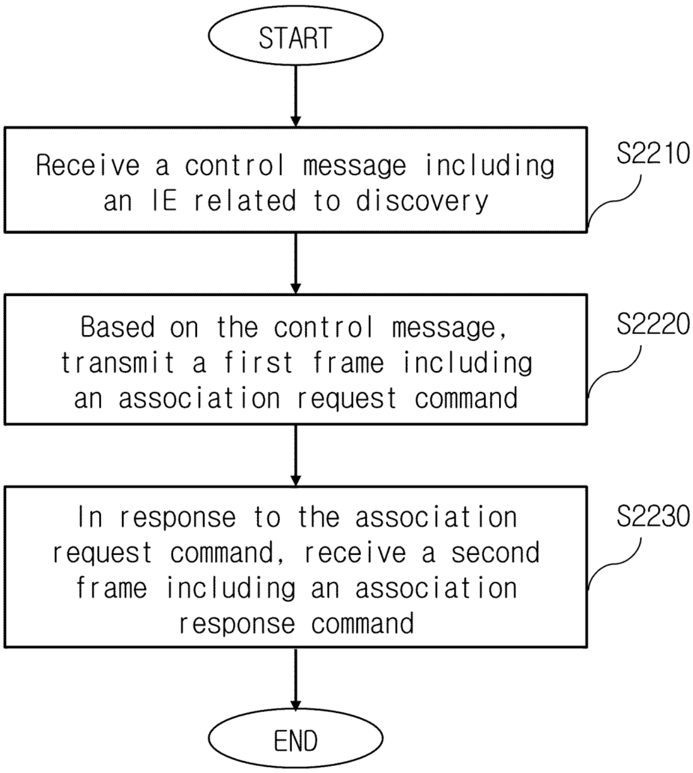
START
Receive a control message including an IE related to discovery
S2210
Based on the control message, transmit a first frame including an association request command
S2220
In response to the association request command, receive a second frame including an association response command
S2230
END

FIG.23

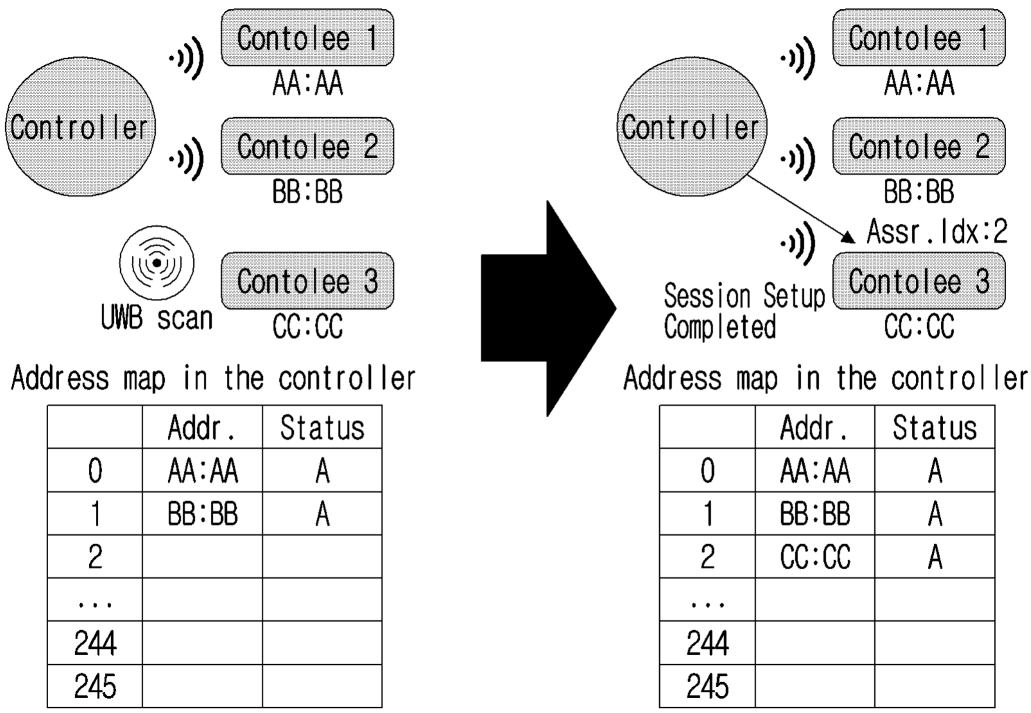


| | Addr. | Status |
|---|---|---|
| 0 | AA:AA | A |
| 1 | BB:BB | A |
| 2 | | |
| ... | | |
| 244 | | |
| 245 | | |

| | Addr. | Status |
|---|---|---|
| 0 | AA:AA | A |
| 1 | BB:BB | A |
| 2 | CC:CC | A |
| ... | | |
| 244 | | |
| 245 | | |

FIG.24

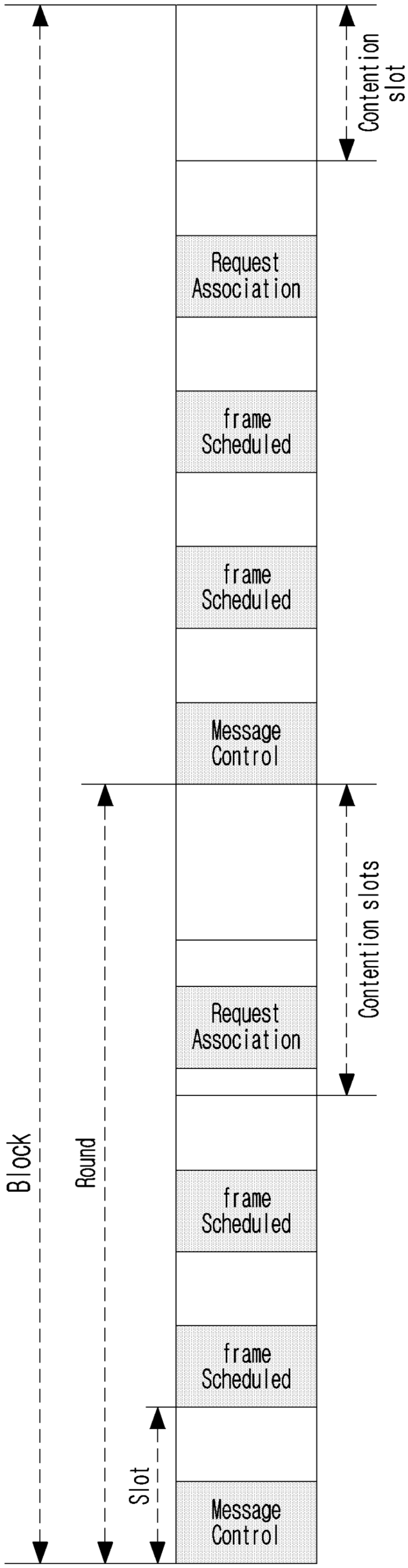
Block
Round
Slot
Message Control
frame Scheduled
frame Scheduled
Request Association
Contention slots
Message Control
frame Scheduled
frame Scheduled
Request Association
Contention slot

FIG.25

(a)

| Octets: 4 | 2 | 0/1 |
|---|---|---|
| Session ID | Capability information | Address index requested by controlee |

(b)

| Octets: 1 | 0/1 | 0/1 |
|---|---|---|
| Association status | Session setup | Address index |

FIG.26

| Bits: 0–3 | 4–6 | 7 | 8 | 9 | 9–15 | Octets: variable |
|---|---|---|---|---|---|---|
| Scheduling list length | Scheduling list type | Address size | Presence of Receiver address | Address index | Reserved | Scheduling list |

FIG.27

(a)

| Octets: 1 | 0/2/8 | 0/1 |
|---|---|---|
| Slot index | Sender address | Sender address index |

(b)

| Octets: 0/2/8 | 0/1 |
|---|---|
| Sender address | Sender address index |

(c)

| Bits: 0–1 | 2 | 3–7 | Octets: variable | 0/2/8 | 0/1 | 0/2/8 | 0/1 |
|---|---|---|---|---|---|---|---|
| Scheduling Bitmap length | Presence of Bitmap Offset | Reserved | Scheduling Bitmap | Sender address | Sender address index | Receiver address | Bitmap Offset |

(d)

| Bits: 0–6 | 7–10 | 11–15 | Octets: 0/2/8 | 0/1 | 0/2/8 |
|---|---|---|---|---|---|
| Start slot offset | Scheduling step | Scheduling repetition | Sender address | Sender address index | Receiver address |

(e)

| Bits: 0–6 | 7–10 | 11–15 | Octets: 0/2/8 | 0/1 | 0/2/8 | 1 | 1 | 1 |
|---|---|---|---|---|---|---|---|---|
| Start slot offset | Scheduling step | Scheduling repetition | Sender address | Sender address index | Receiver address | Sequence index | Number of Gaps | Sequence repetition |

(f)

| Bits: 0–1 | 2-7 | Octets: variable | 0/2/8 | 0/1 |
|---|---|---|---|---|
| Block Scheduling Bitmap length | Reserved | Block Scheduling Bitmap | Sender address | Sender address index |

FIG.28

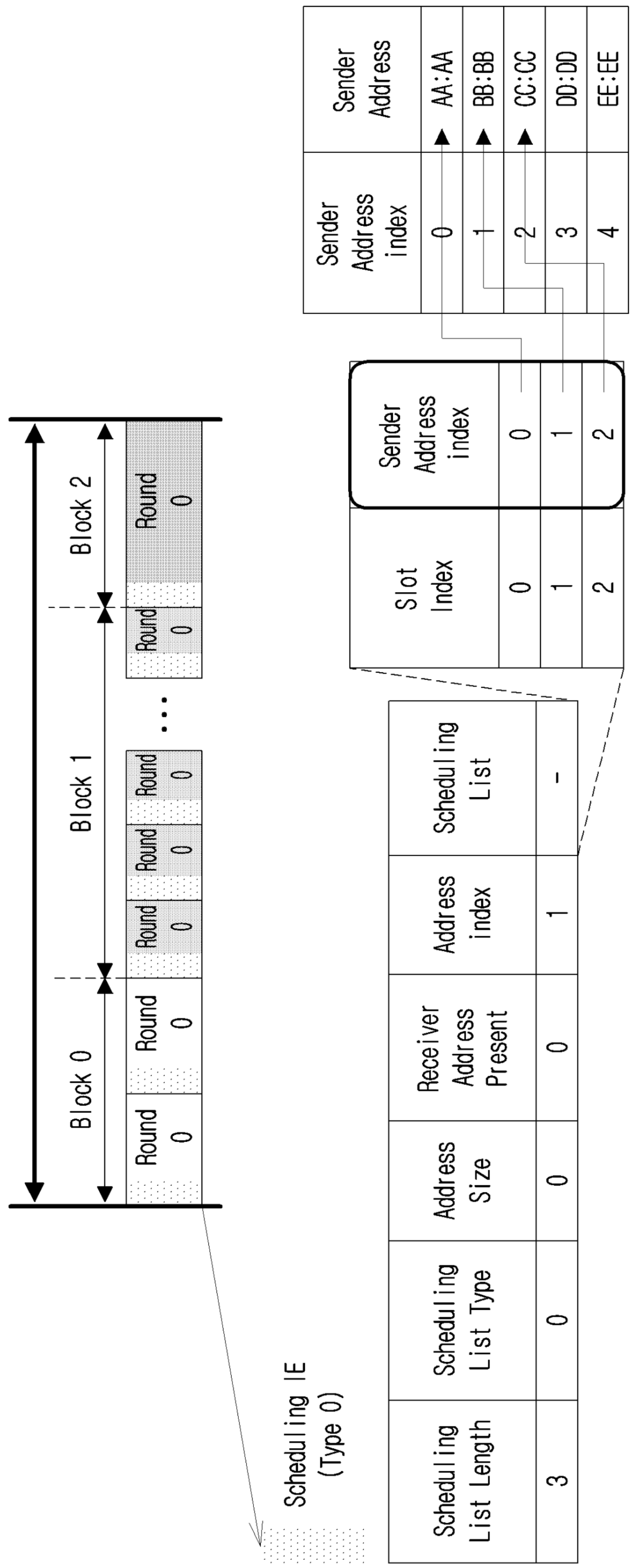
Block 0
Block 1
Block 2
Round 0
Round 0
Round 0
Round 0
Round 0
Round 0
Round 0
Scheduling IE (Type 0)
Scheduling List Length
Scheduling List Type
Address Size
Receiver Address Present
Address index
Scheduling List
3
0
0
0
1
-
Slot Index
Sender Address index
0
1
2
Sender Address index
Sender Address
0
1
2
3
4
AA:AA
BB:BB
CC:CC
DD:DD
EE:EE

FIG.29

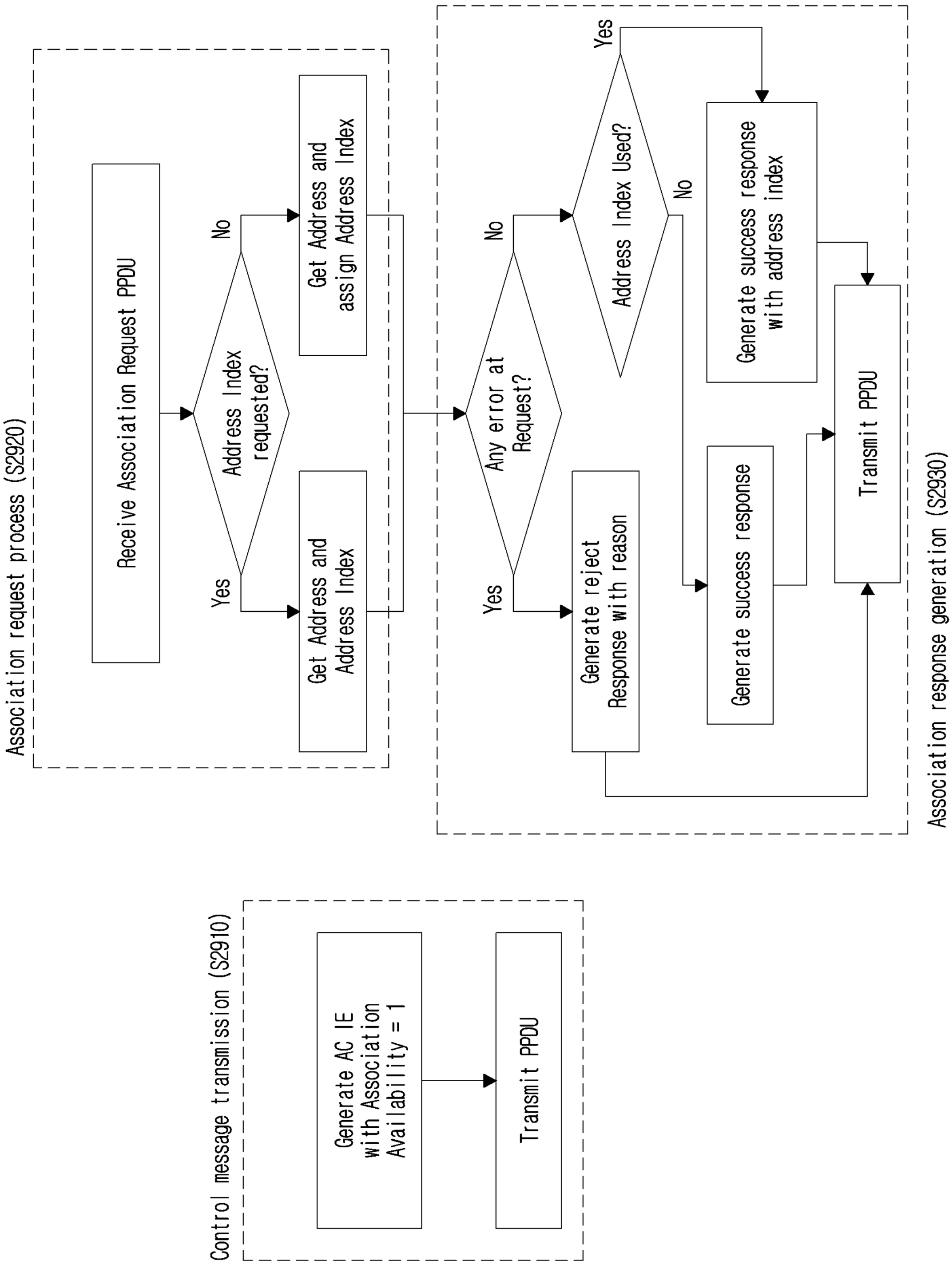
Control message transmission (S2910)
Generate AC IE with Association Availability = 1
Transmit PPDU
Association request process (S2920)
Receive Association Request PPDU
Address Index requested?
Yes
No
Get Address and Address Index
Get Address and assign Address Index
Association response generation (S2930)
Any error at Request?
Yes
No
Generate reject Response with reason
Address Index Used?
Yes
No
Generate success response
Generate success response with address index
Transmit PPDU

FIG.30

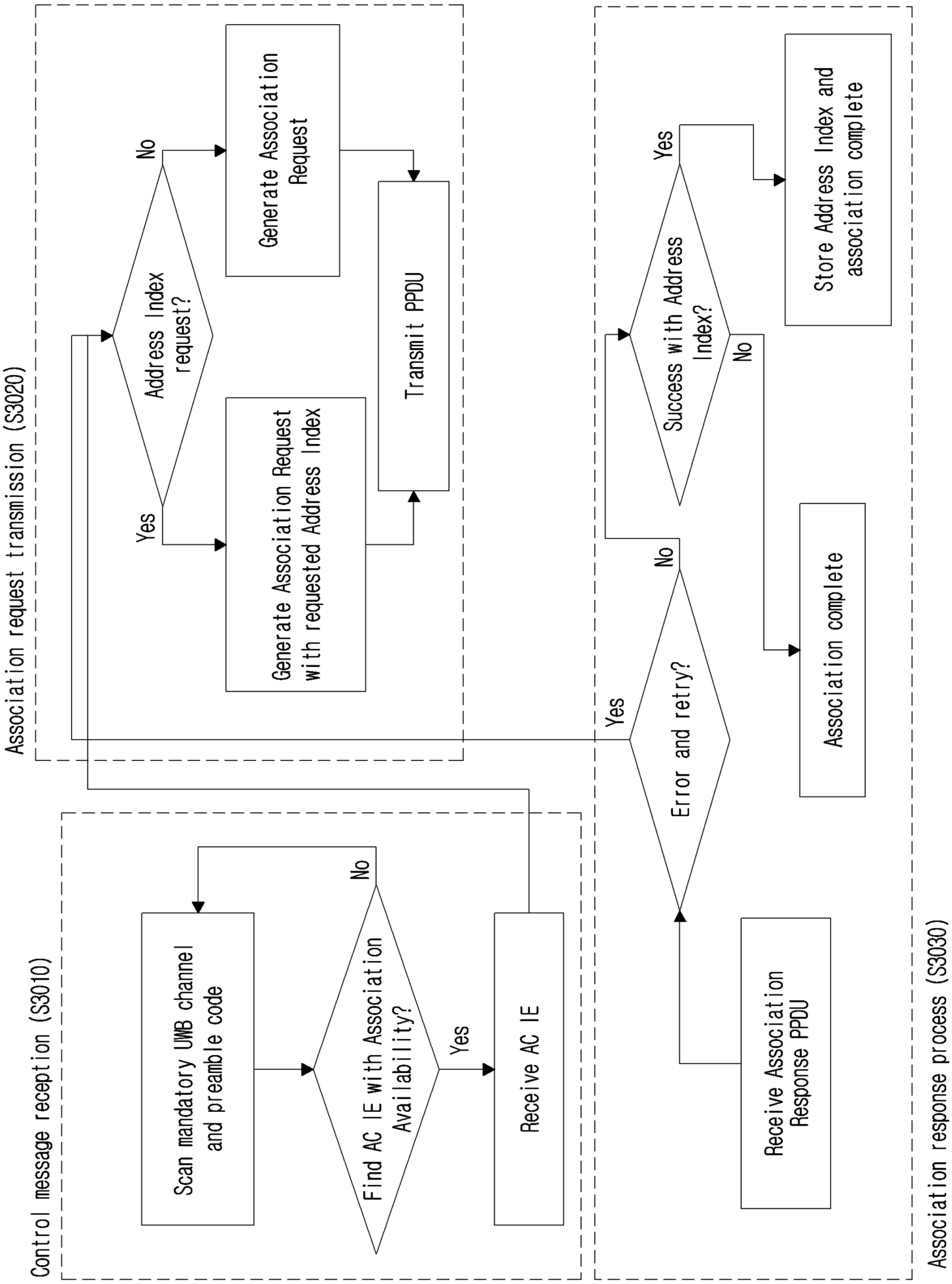
Control message reception (S3010)
Scan mandatory UWB channel and preamble code
Find AC IE with Association Availability?
No
Yes
Receive AC IE
Association request transmission (S3020)
Address Index request?
No
Yes
Generate Association Request
Generate Association Request with requested Address Index
Transmit PPDU
Association response process (S3030)
Receive Association Response PPDU
Error and retry?
Yes
No
Success with Address Index?
Yes
No
Store Address Index and association complete
Association complete

**INTERNATIONAL SEARCH REPORT**

International application No.
**PCT/KR2024/005568**

**A. CLASSIFICATION OF SUBJECT MATTER**

**H04W 4/80**(2018.01)i; **H04W 8/00**(2009.01)i; **H04W 76/10**(2018.01)i; **G01S 13/02**(2006.01)i; **G01S 13/75**(2006.01)i

According to International Patent Classification (IPC) or to both national classification and IPC

**B. FIELDS SEARCHED**

Minimum documentation searched (classification system followed by classification symbols)

H04W 4/80(2018.01); H04W 28/02(2009.01); H04W 28/06(2009.01); H04W 48/14(2009.01); H04W 72/04(2009.01); H04W 76/10(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: IE(information element), 연관(association), AID(association ID), 옥텟(octet)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2015-0068378 A (LG ELECTRONICS INC.) 19 June 2015 (2015-06-19) See paragraphs [0032]-[0106]. | 1-16 |
| Y | KR 10-2014-0125797 A (LG ELECTRONICS INC.) 29 October 2014 (2014-10-29) See paragraphs [0187]-[0191]. | 1-16 |
| Y | WO 2022-136126 A1 (CANON KABUSHIKI KAISHA et al.) 30 June 2022 (2022-06-30) See page 13, line 5 - page 16, line 8. | 6-9 |
| Y | GAN, Ming et al. Association Exchange using Contention based UL OFDMA. IEEE 802.11-17/0396r0. 14 March 2017. See slide 8. | 10 |
| A | KR 10-2014-0120873 A (KT CORPORATION) 14 October 2014 (2014-10-14) See paragraphs [0056]-[0066]. | 1-16 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 August 2024** | **12 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/005568**

| Patent document cited in search report | Publication date (day/month/year) | Patent family member(s) | Publication date (day/month/year) |
|---|---|---|---|
| KR 10-2015-0068378 A | 19 June 2015 | AU 2013-303396 A1 | 12 March 2015 |
| | | AU 2013-303396 B2 | 01 February 2018 |
| | | CN 104718777 A | 17 June 2015 |
| | | CN 104718777 B | 19 October 2018 |
| | | EP 2884804 A1 | 17 June 2015 |
| | | EP 2884804 B1 | 30 May 2018 |
| | | JP 2015-531210 A | 29 October 2015 |
| | | JP 6346180 B2 | 20 June 2018 |
| | | KR 10-2015-0058200 A | 28 May 2015 |
| | | US 2015-0245282 A1 | 27 August 2015 |
| | | US 2015-0282157 A1 | 01 October 2015 |
| | | US 2017-0070948 A1 | 09 March 2017 |
| | | US 9521609 B2 | 13 December 2016 |
| | | US 9838954 B2 | 05 December 2017 |
| | | WO 2014-027829 A1 | 20 February 2014 |
| | | WO 2014-054910 A1 | 10 April 2014 |
| KR 10-2014-0125797 A | 29 October 2014 | US 2015-0063232 A1 | 05 March 2015 |
| | | US 9467890 B2 | 11 October 2016 |
| | | WO 2013-122437 A1 | 22 August 2013 |
| WO 2022-136126 A1 | 30 June 2022 | CN 116746247 A | 12 September 2023 |
| | | EP 4268511 A1 | 01 November 2023 |
| | | GB 2602302 A | 29 June 2022 |
| | | GB 2602302 B | 28 June 2023 |
| | | JP 2023-546772 A | 08 November 2023 |
| | | KR 10-2023-0104960 A | 11 July 2023 |
| | | US 2024-0040621 A1 | 01 February 2024 |
| KR 10-2014-0120873 A | 14 October 2014 | CN 104412631 A | 11 March 2015 |
| | | CN 104412631 B | 17 August 2018 |
| | | CN 108834135 A | 16 November 2018 |
| | | CN 108834135 B | 06 September 2022 |
| | | JP 2015-526011 A | 07 September 2015 |
| | | JP 2017-005733 A | 05 January 2017 |
| | | JP 2018-014748 A | 25 January 2018 |
| | | JP 5982571 B2 | 31 August 2016 |
| | | JP 6215411 B2 | 18 October 2017 |
| | | JP 6386644 B2 | 05 September 2018 |
| | | KR 10-1553858 B1 | 17 September 2015 |
| | | KR 10-2014-0003339 A | 09 January 2014 |
| | | US 10299156 B2 | 21 May 2019 |
| | | US 2015-0146524 A1 | 28 May 2015 |
| | | US 2018-0146394 A1 | 24 May 2018 |
| | | US 9913162 B2 | 06 March 2018 |
| | | WO 2014-003479 A1 | 03 January 2014 |

Form PCT/ISA/210 (patent family annex) (July 2022)